# EUROPEAN PATENT SPECIFICATION

(11) **EP 4 224 879 B1**
(45) Date of publication and mention of the grant of the patent: **04.11.2026**
(21) Application number: 21875347.3
(22) Date of filing: 22.09.2021
(51) Int. Cl.: H04M 1/72472, H04M 1/247, H04L 12/28, G06F 9/451, H04Q 9/00, G06F 3/04847, G06F 3/0482, H04M 1/72451, H04M 1/72415

(54) **INFORMATION PROCESSING METHOD, INFORMATION PROCESSING DEVICE, AND PROGRAM**
INFORMATIONSVERARBEITUNGSVERFAHREN, INFORMATIONSVERARBEITUNGSVORRICHTUNG UND PROGRAMM
PROCÉDÉ DE TRAITEMENT D'INFORMATIONS, DISPOSITIF DE TRAITEMENT D'INFORMATIONS ET PROGRAMME

(30) Priority: 01.10.2020 JP 2020167017
(43) Date of publication of application: 09.08.2023
(73) Proprietor: Panasonic Intellectual Property Management Co., Ltd., Osaka-shi, Osaka 540-6207 (JP)
(72) Inventor: NISHIMURA, Ryo, Osaka-shi, Osaka 540-6207 (JP); NAKASO, Mariko, Osaka-shi, Osaka 540-6207 (JP); OKUBO, Masafumi, Osaka-shi, Osaka 540-6207 (JP); SUGIMOTO, Hiroko, Osaka-shi, Osaka 540-6207 (JP)
(74) Representative: Novagraaf International SA
(86) International application number: PCT/JP2021/034730
(87) International publication number: WO 2022/071045

(56) References cited:
- WO-A1-2008/059710
- JP-A- 2011 096 179
- JP-A- 2013 210 952
- JP-A- 2014 197 779
- JP-A- 2019 205 120
- US-A1- 2020 162 281

## Description

### [Technical Field]

The present disclosure relates to information processing methods, information processing devices, and programs.

### [Background Art]

Conventionally, a device operation support service provision system is proposed which analyzes device operation information of a user, predicts the device operation of the user based on the result of the analysis, and supports, based on the result of the prediction, the device operation when content is provided to the user (see, for example, Patent Literature (PTL) 1.

Document US 2020/162281 A1 also forms part of the related art.

### [Citation List]

### [Patent Literature]

[PTL 1] Japanese Unexamined Patent Application Publication No. 2004-180129

### [Summary of Invention]

### [Technical Problem]

However, since the tendency of the device operation differs depending on the user, it may be difficult to present appropriate details of presentation to the user.

The present disclosure provides an information processing method and the like for presenting appropriate details of presentation to a user.

### [Solution to Problem]

The invention is directed to the subject-matter of the independent claims. Advantageous embodiments are set out in the dependent claims.

An information processing method according to the present disclosure is an information processing method that includes: acquiring device information and operation information in association with each other, the device information being information on a device, the operation information indicating details of a first operation performed on the device a plurality of times; determining, based on the details of the first operation indicated in the operation information, which one of a candidate image and an input field image is to be selected as an image to be presented to a user, the candidate image including a candidate for a second operation to be performed on the device, the input field image including an input field for a detail of the second operation; and controlling presenting the image to the user according to the determining.

### [Advantageous Effects of Invention]

In the information processing method according to the present disclosure, it is possible to present appropriate details of presentation to the user.

### [Brief Description of Drawings]

[FIG. 1]

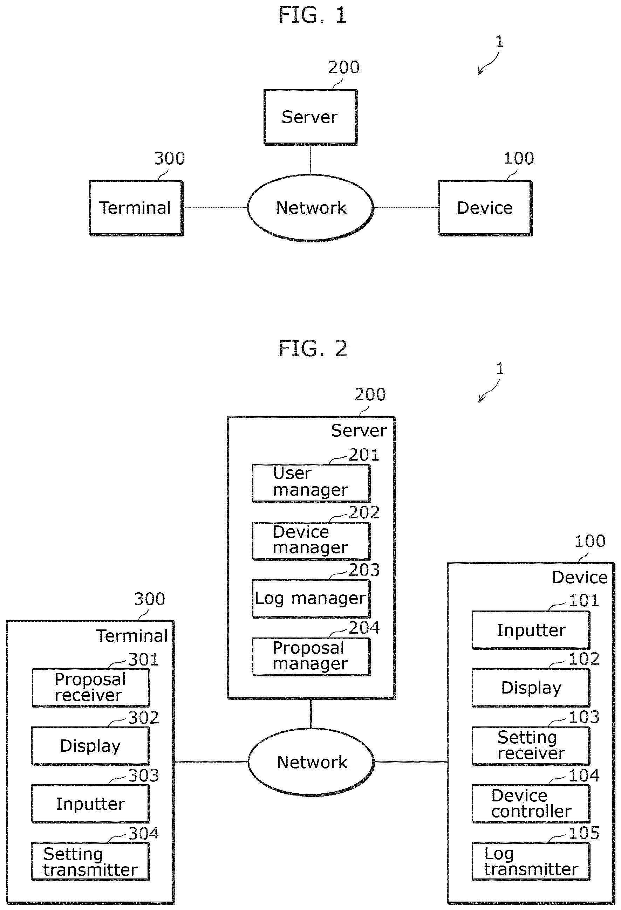

   FIG. 1 is a configuration view of a device operation setting proposal system in Embodiment 1.
[FIG. 2]
   FIG. 2 is a block diagram of the device operation setting proposal system in Embodiment 1.
[FIG. 3A]

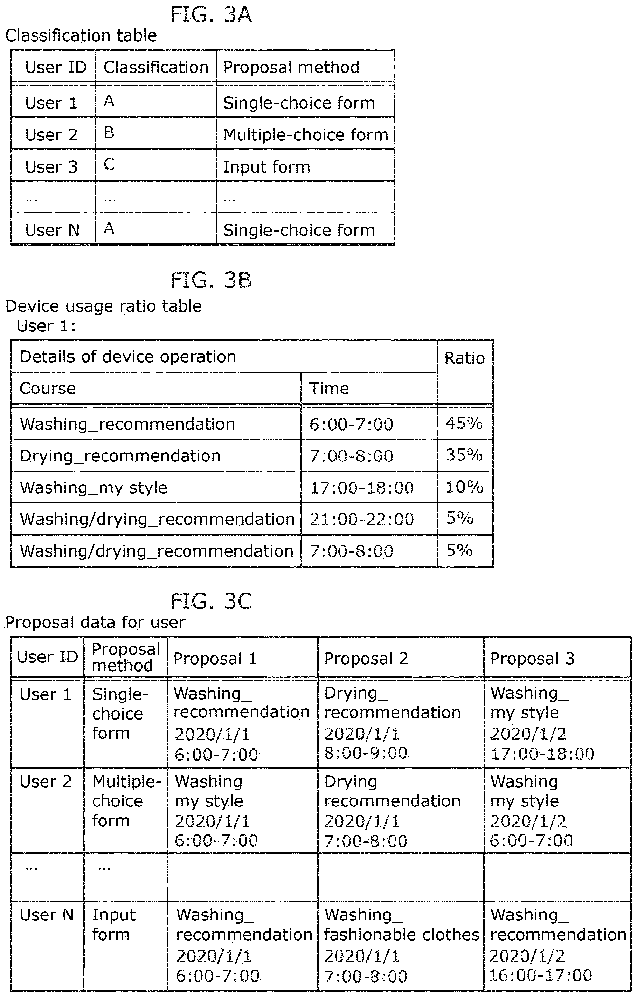

   FIG. 3A is a first illustrative view showing a data configuration of the device operation setting proposal system in Embodiment 1.
[FIG. 3B]
   FIG. 3B is a second illustrative view showing a data configuration of the device operation setting proposal system in Embodiment 1.
[FIG. 3C]
   FIG. 3C is a third illustrative view showing a data configuration of the device operation setting proposal system in Embodiment 1.
[FIG. 4]

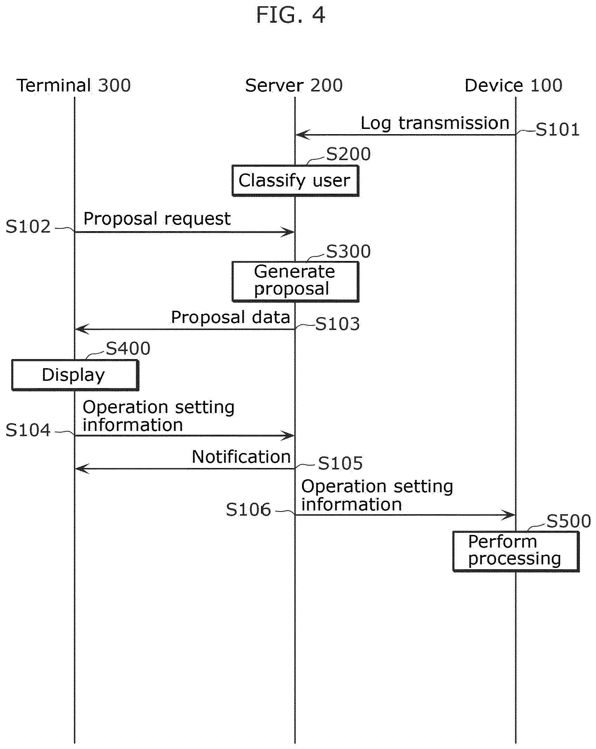

   FIG. 4 is a sequence diagram of the device operation setting proposal system in Embodiment 1.
[FIG. 5]

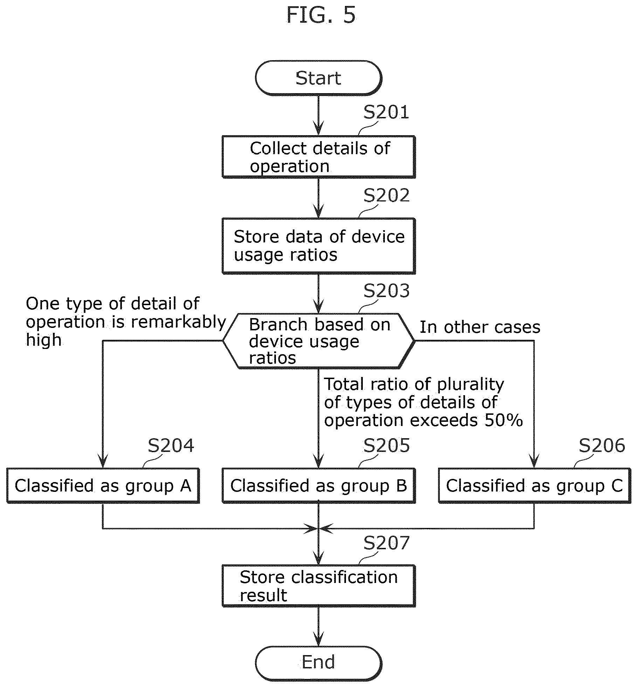

   FIG. 5 is a flow diagram showing processing when a server performs log analysis in Embodiment 1.
[FIG. 6]

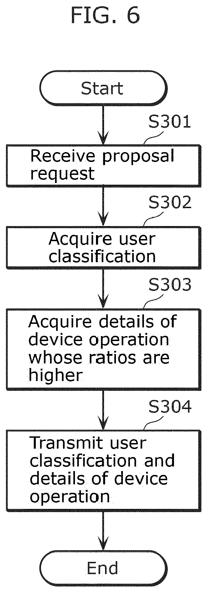

   FIG. 6 is a flow diagram showing processing when the server performs proposal generation in Embodiment 1.
[FIG. 7]

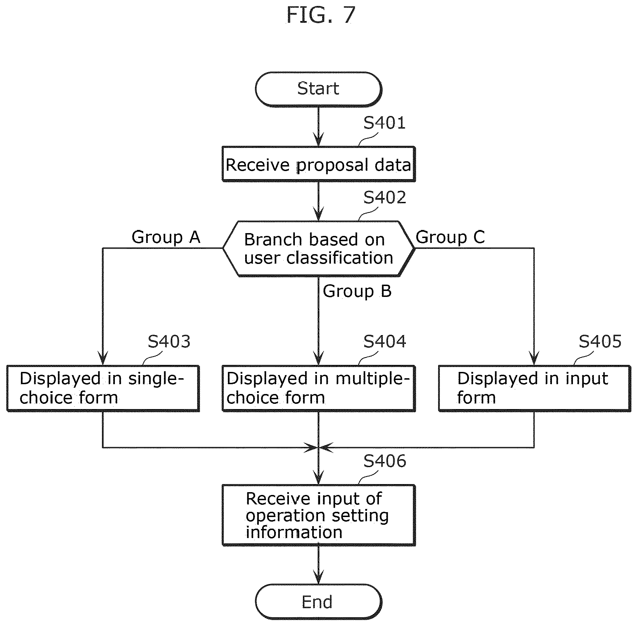

   FIG. 7 is a flow diagram showing processing when a terminal displays a proposal in Embodiment 1.
[FIG. 8A]

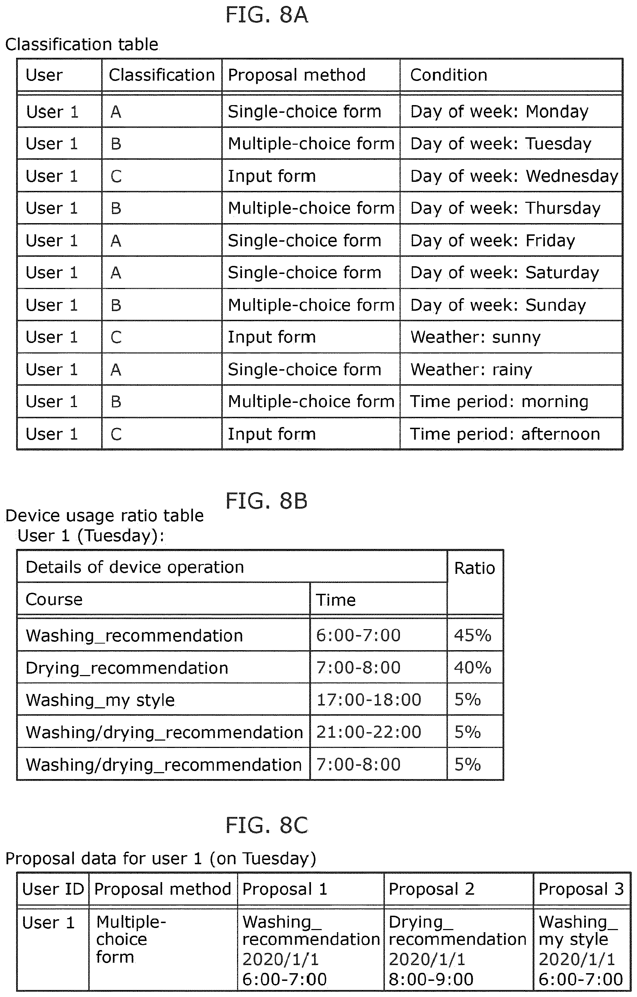

   FIG. 8A is a first illustrative view showing a data configuration of a device operation setting proposal system in Embodiment 2.
[FIG. 8B]
   FIG. 8B is a second illustrative view showing a data configuration of the device operation setting proposal system in Embodiment 2.
[FIG. 8C]
   FIG. 8C is a third illustrative view showing a data configuration of the device operation setting proposal system in Embodiment 2.
[FIG. 9]

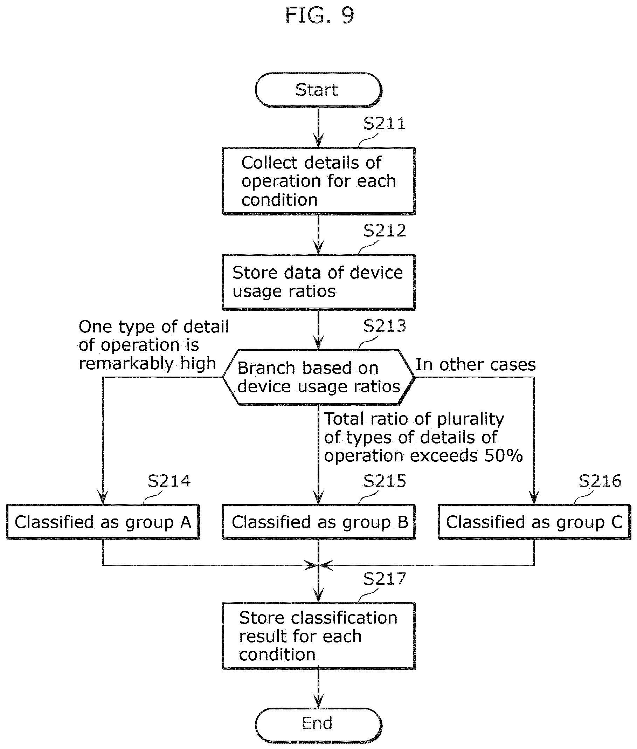

   FIG. 9 is a flow diagram showing processing when the device operation setting proposal system performs log analysis in Embodiment 2.
[FIG. 10]

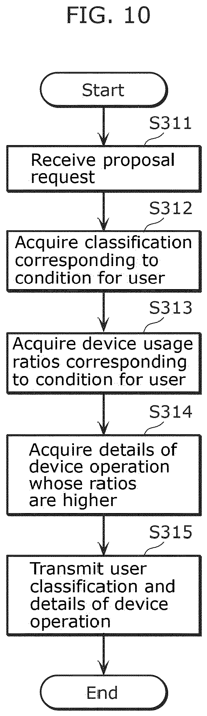

   FIG. 10 is a flow diagram showing processing when the device operation setting proposal system performs proposal generation in Embodiment 2.
[FIG. 11A]

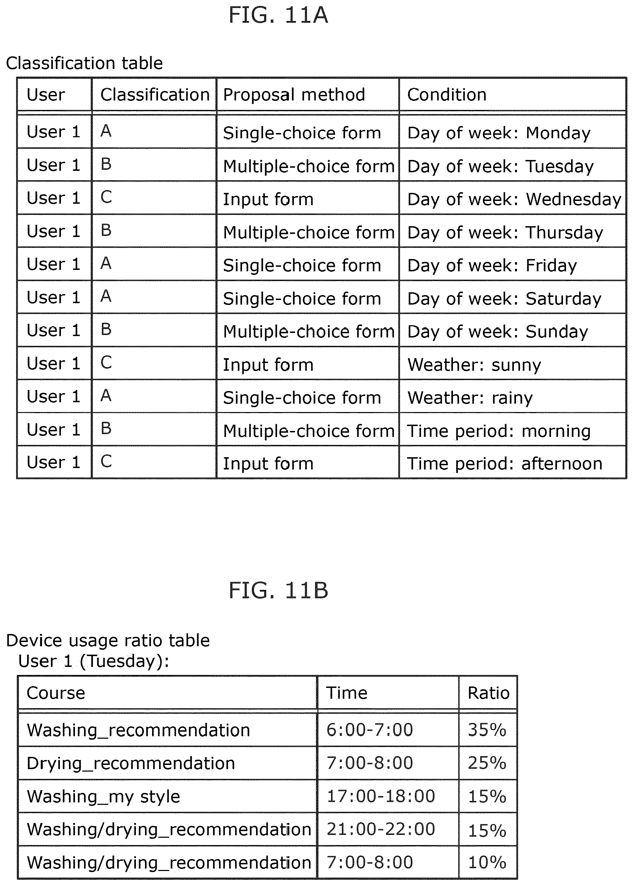

   FIG. 11A is a first illustrative view showing a data configuration of a device operation setting proposal system in Embodiment 3.
[FIG. 11B]
   FIG. 11B is a second illustrative view showing a data configuration of the device operation setting proposal system in Embodiment 3.
[FIG. 11C]

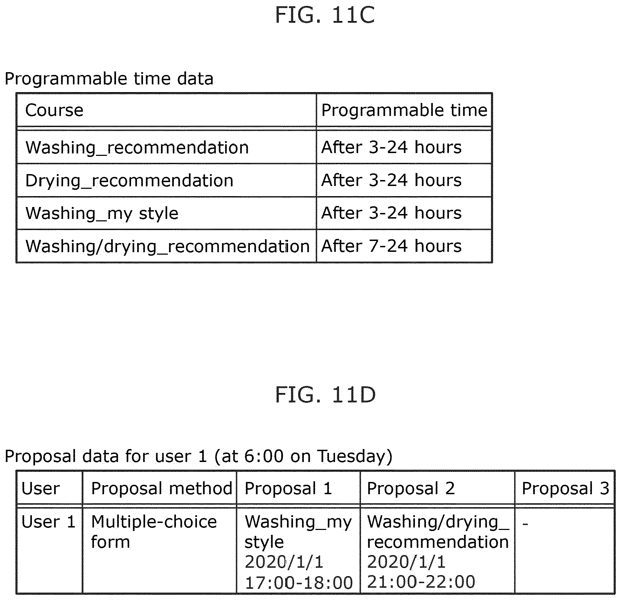

   FIG. 11C is a third illustrative view showing a data configuration of the device operation setting proposal system in Embodiment 3.
[FIG. 11D]
   FIG. 11D is a fourth illustrative view showing the data configuration of the device operation setting proposal system in Embodiment 3.
[FIG. 12]

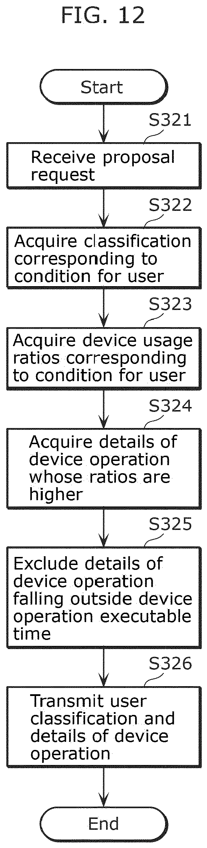

   FIG. 12 is a flow diagram showing processing when the device operation setting proposal system performs proposal generation in Embodiment 3.
[FIG. 13]

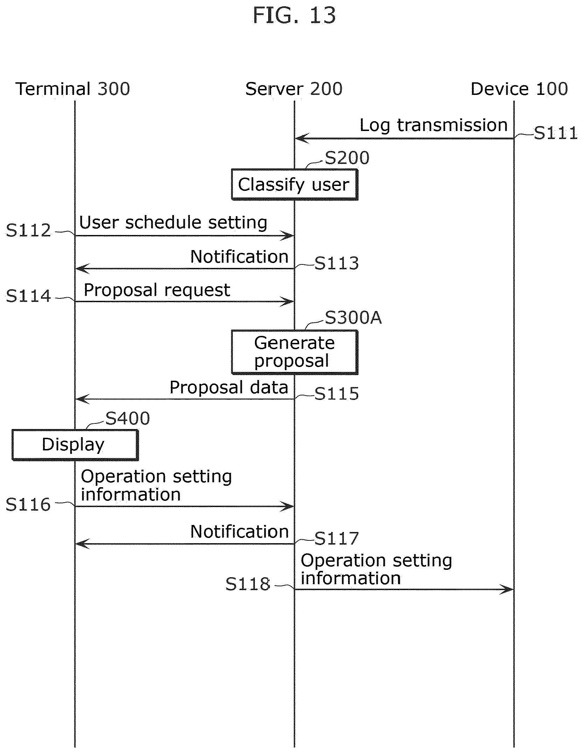

   FIG. 13 is a sequence diagram of a device operation setting proposal system in Embodiment 4.
[FIG. 14A]

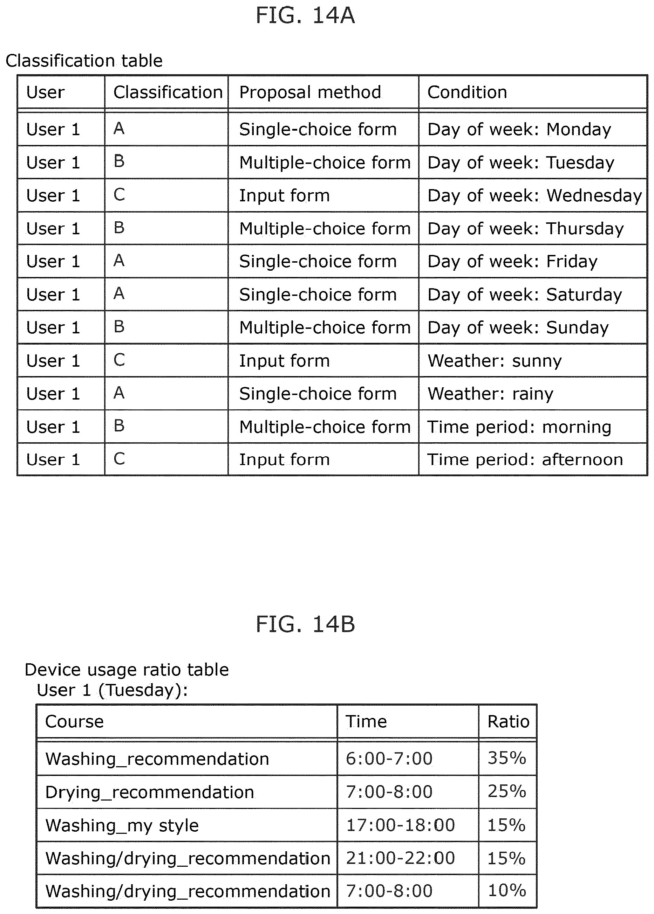

   FIG. 14A is a first illustrative view showing a data configuration of the device operation setting proposal system in Embodiment 4.
[FIG. 14B]
   FIG. 14B is a second illustrative view showing a data configuration of the device operation setting proposal system in Embodiment 4.
[FIG. 14C]

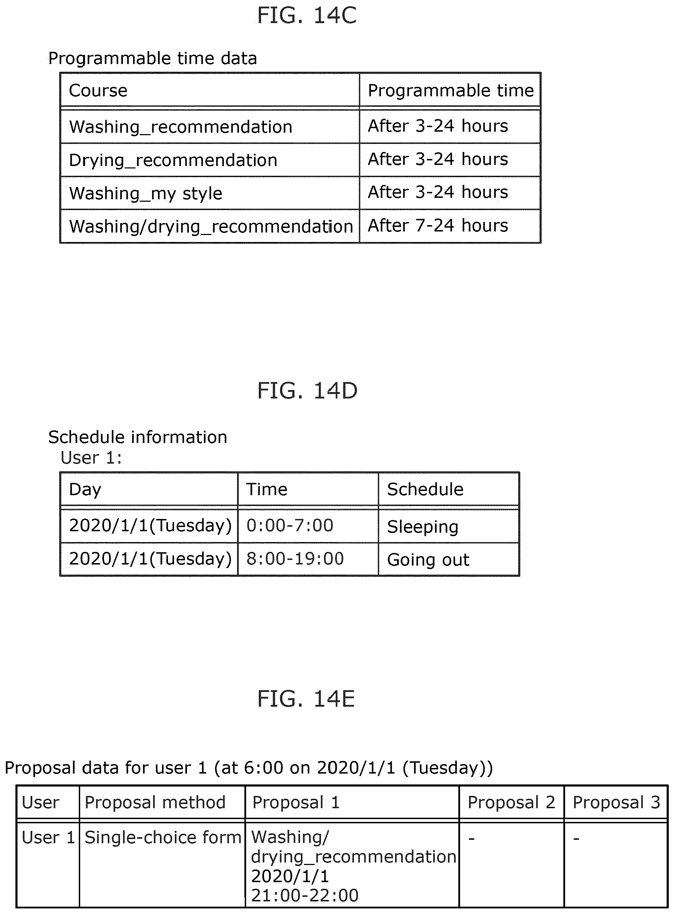

   FIG. 14C is a third illustrative view showing a data configuration of the device operation setting proposal system in Embodiment 4.
[FIG. 14D]
   FIG. 14D is a fourth illustrative view showing a data configuration of the device operation setting proposal system in Embodiment 4.
[FIG. 14E]
   FIG. 14E is a fifth illustrative view showing a data configuration of the device operation setting proposal system in Embodiment 4.
[FIG. 15]

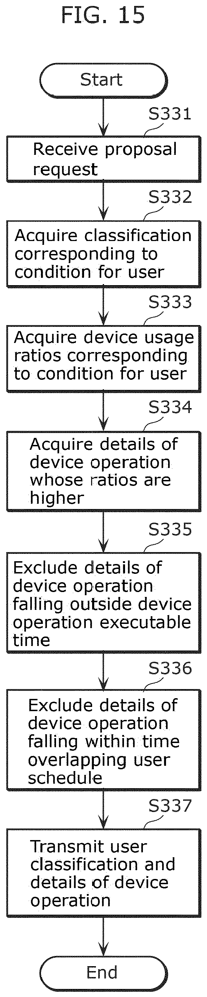

   FIG. 15 is a flow diagram showing processing when the device operation setting proposal system performs proposal generation in Embodiment 4.
[FIG. 16]

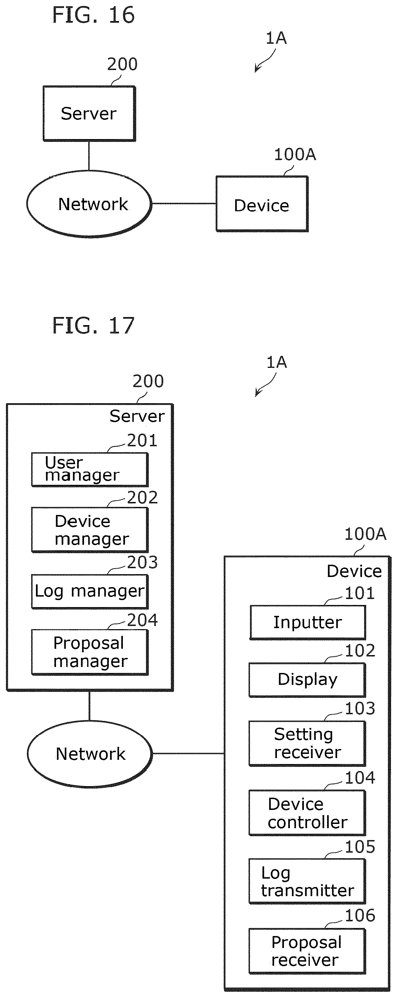

   FIG. 16 is a system configuration view of a device operation setting proposal system in Embodiment 5.
[FIG. 17]
   FIG. 17 is a block diagram of the device operation setting proposal system in Embodiment 5.
[FIG. 18]

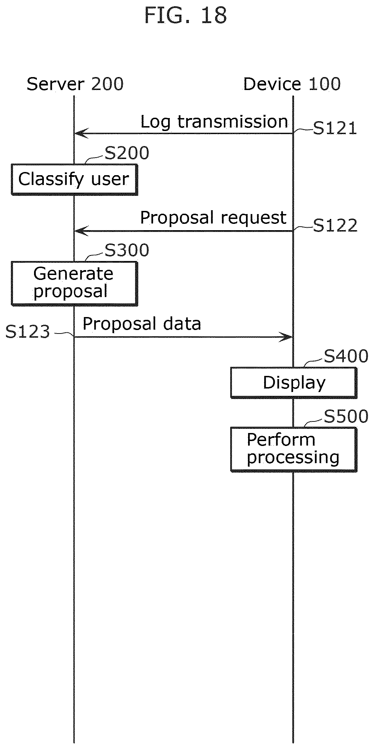

   FIG. 18 is a sequence diagram of the device operation setting proposal system in Embodiment 5.
[FIG. 19]

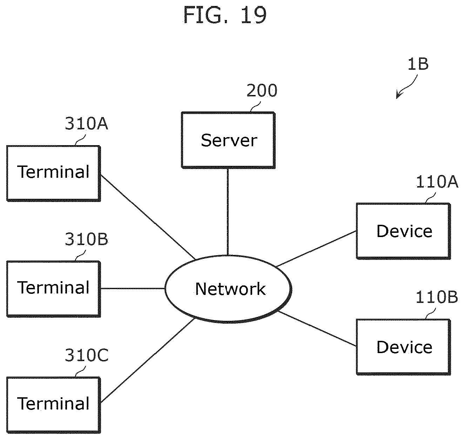

   FIG. 19 is a system configuration view of a device operation setting proposal system in Embodiment 6.
[FIG. 20]

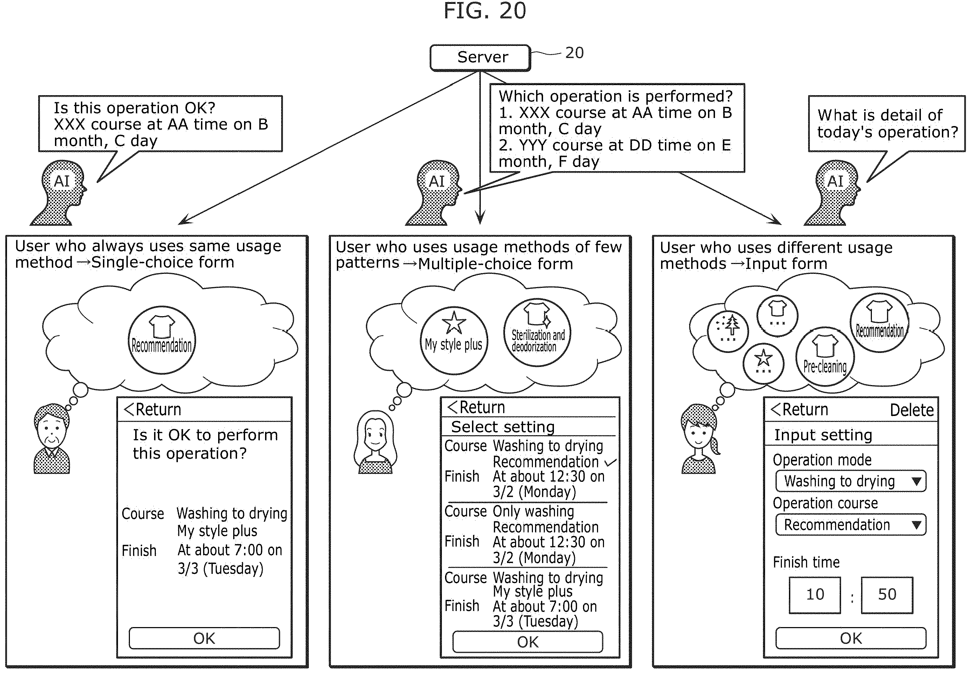

   FIG. 20 is an illustrative view showing samples of a proposal made by the device operation setting proposal systems in Embodiments 1 to 6.
[FIG. 21]

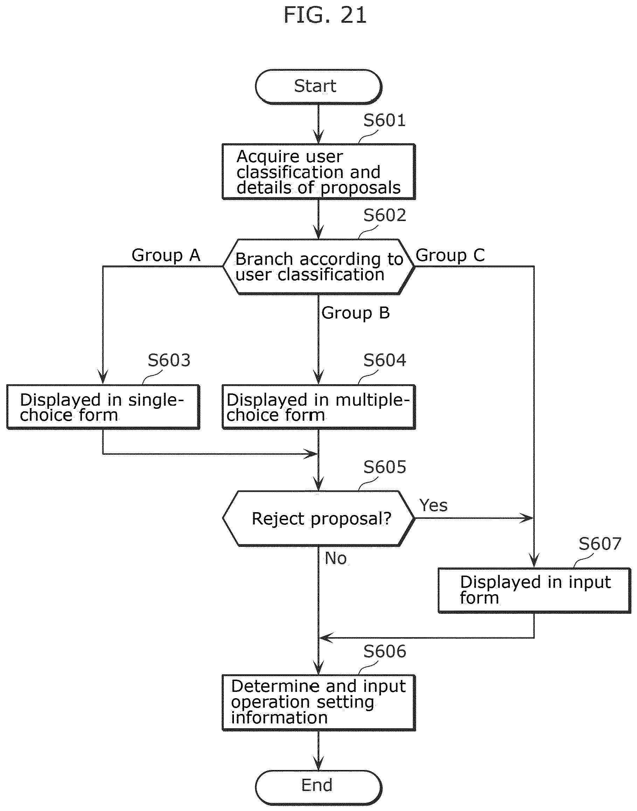

   FIG. 21 is an illustrative view showing Variation 1 of Embodiments 1 to 6.
[FIG. 22]

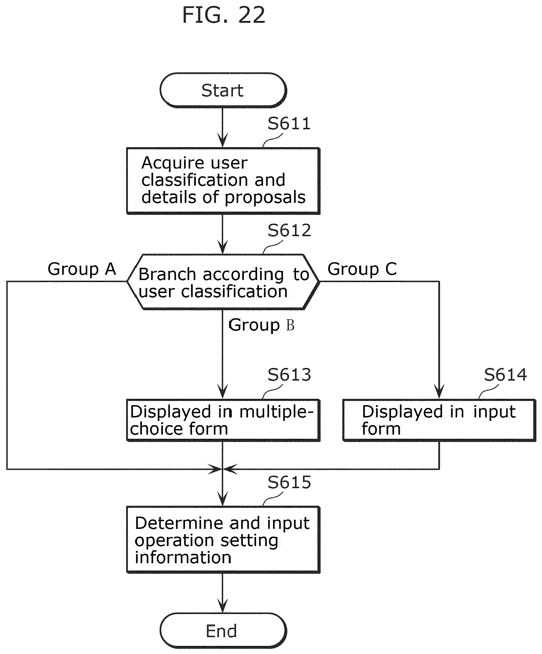

   FIG. 22 is an illustrative view showing Variation 2 of Embodiments 1 to 6.
[FIG. 23A]

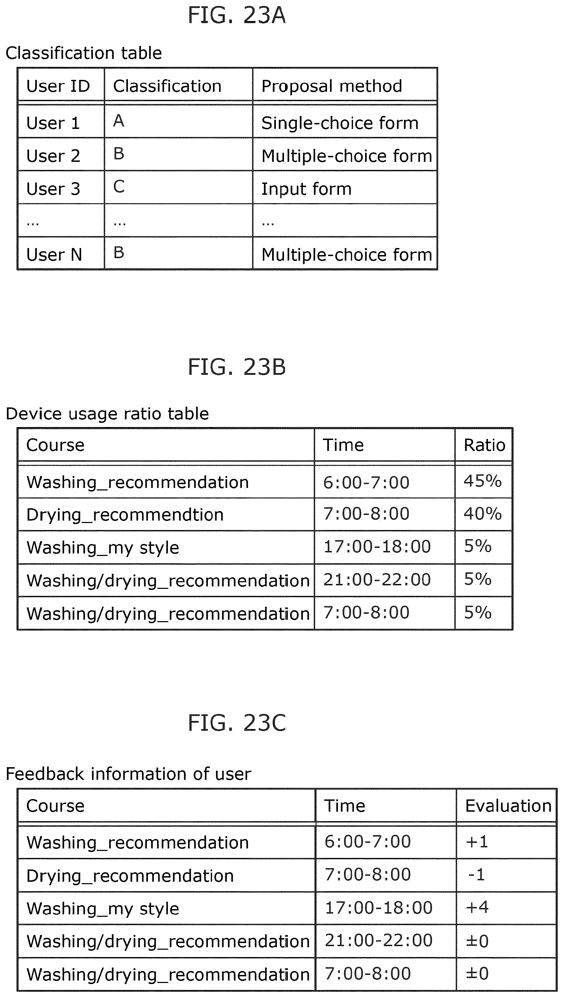

   FIG. 23A is a first illustrative view of Variation 3 of Embodiments 1 to 6.
[FIG. 23B]
   FIG. 23B is a second illustrative view of Variation 3 of Embodiments 1 to 6.
[FIG. 23C]
   FIG. 23C is a third illustrative view of Variation 3 of Embodiments 1 to 6.
[FIG. 23D]

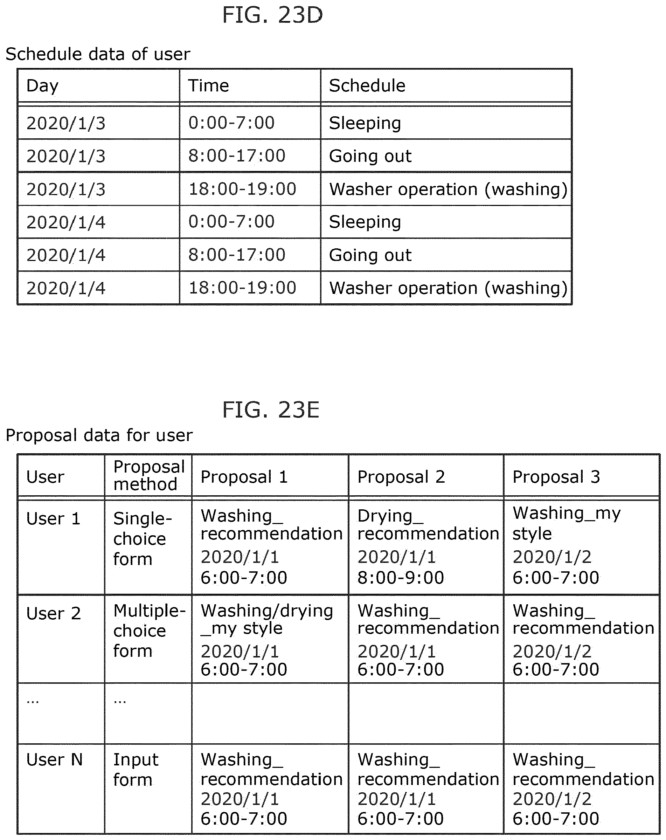

   FIG. 23D is a fourth illustrative view of Variation 3 of Embodiments 1 to 6.
[FIG. 23E]
   FIG. 23E is a fifth illustrative view of Variation 3 of Embodiments 1 to 6.
[FIG. 24]

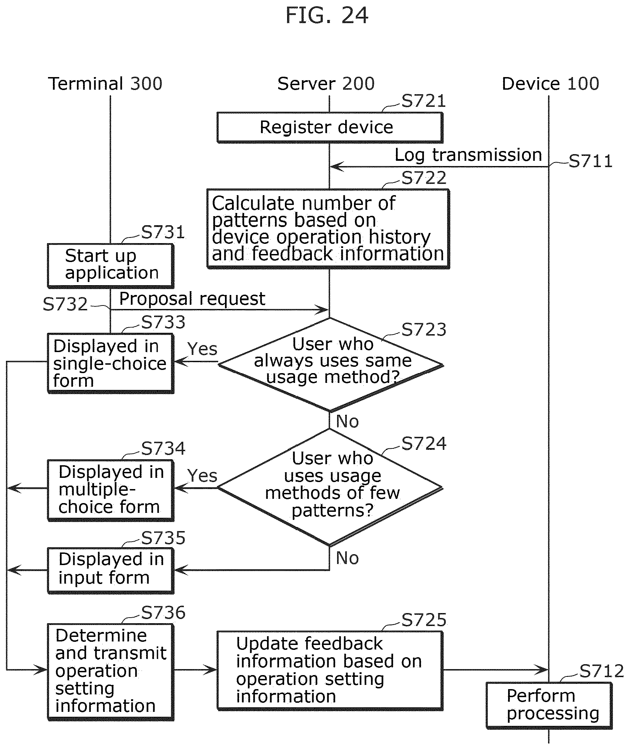

   FIG. 24 is a sixth illustrative view of Variation 3 of Embodiments 1 to 6.
[FIG. 25]

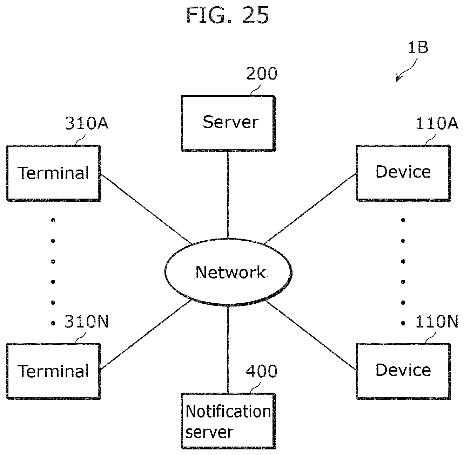

   FIG. 25 is a first illustrative view of Variation 4 of Embodiments 1 to 6.
[FIG. 26]

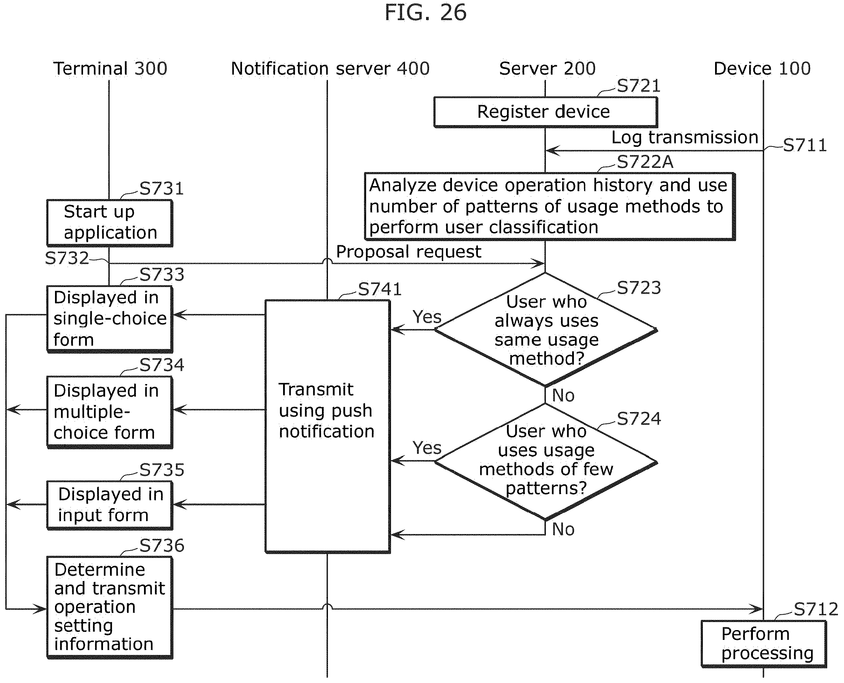

   FIG. 26 is a second illustrative view of Variation 4 of Embodiments 1 to 6.
[FIG. 27]

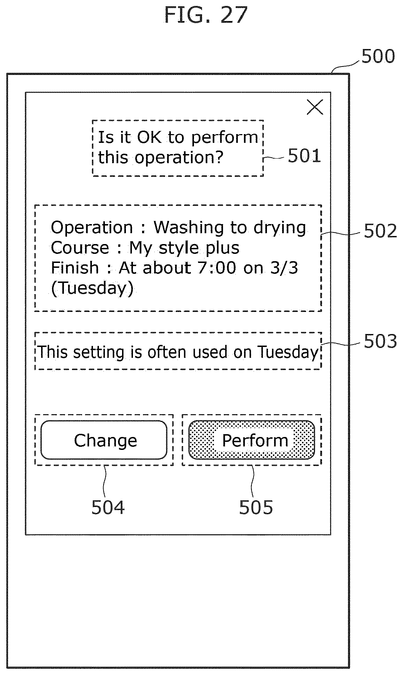

   FIG. 27 is an illustrative view of a first example of an image displayed by the terminal in Embodiments 1 to 6.
[FIG. 28]

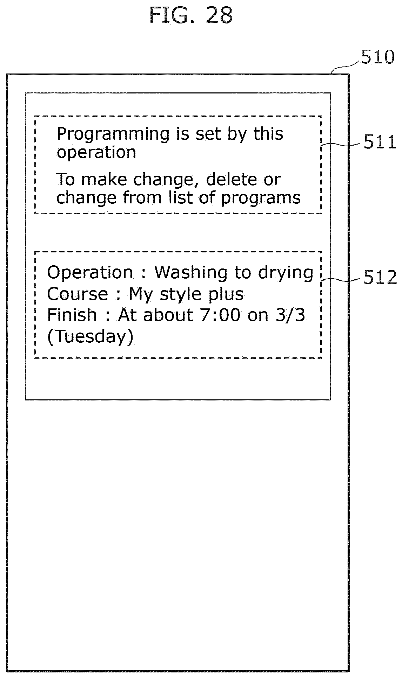

   FIG. 28 is an illustrative view of a second example of the image displayed by the terminal in Embodiments 1 to 6.
[FIG. 29]

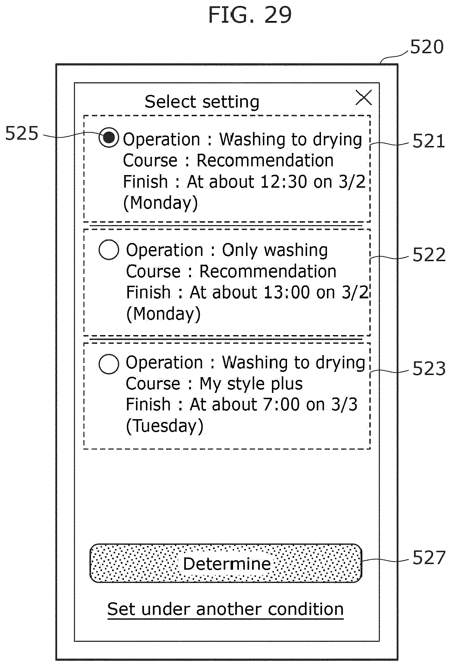

   FIG. 29 is an illustrative view of a third example of the image displayed by the terminal in Embodiments 1 to 6.
[FIG. 30]

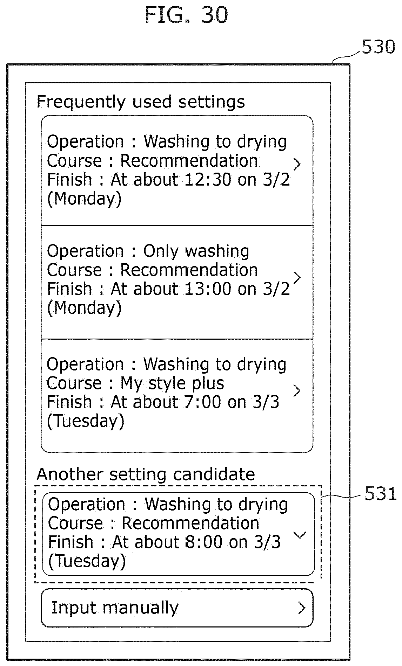

   FIG. 30 is an illustrative view of a fourth example of the image displayed by the terminal in Embodiments 1 to 6.
[FIG. 31]

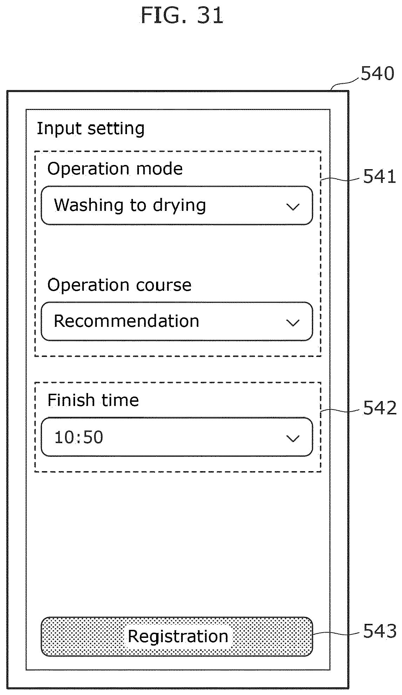

   FIG. 31 is an illustrative view of a fifth example of the image displayed by the terminal in Embodiments 1 to 6.
[FIG. 32]

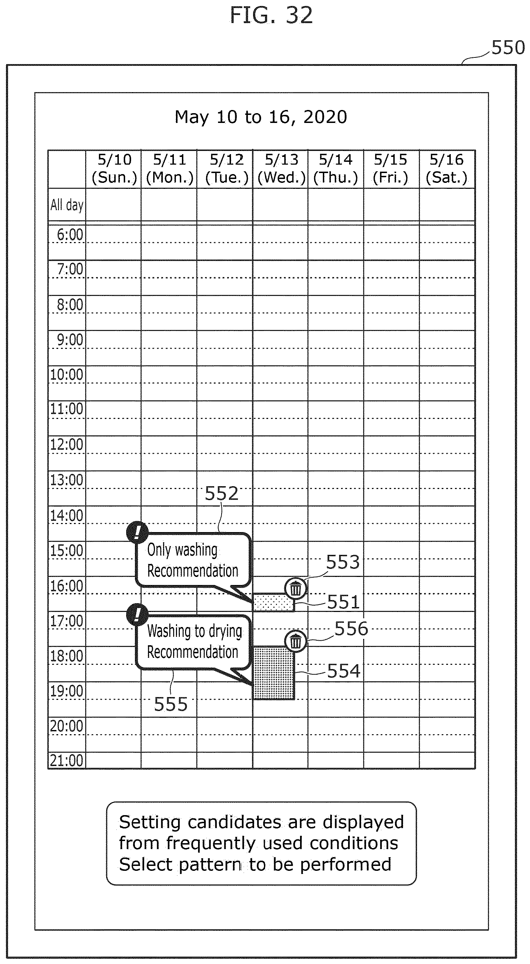

   FIG. 32 is an illustrative view of a sixth example of the image displayed by the terminal in Embodiments 1 to 6.

### [Description of Embodiments]

An information processing method according to an aspect of the present disclosure is an information processing method which includes: acquiring device information and operation information in association with each other, the device information being information on a device, the operation information indicating details of a first operation performed on the device a plurality of times; determining, based on the details of the first operation indicated in the operation information, which one of a candidate image and an input field image is to be selected as an image to be presented to a user, the candidate image including a candidate for a second operation to be performed on the device, the input field image including an input field for a detail of the second operation; and controlling presenting the image to the user according to the determining.

According to the aspect described above, in the information processing method, based on the details of the operation performed on the device a plurality of times in the past, which one of the candidate image and the input field image is presented to the user is determined, and the image is presented. The tendency of the device operation of the user is reflected on the details of the operation performed on the device the plurality of times in the past, and thus by the information processing method described above, it is possible to present, to the user, an appropriate image corresponding to the tendency of the device operation of the user. As described above, in the information processing method, it is possible to present appropriate details of presentation to the user.

Preferably, for example, the candidate image is a first image including a single candidate for the second operation or a second image including a plurality of candidates for the second operation each being the candidate for the second operation, the determining includes determining, based on the details of the first operation indicated in the operation information, which one of the first image serving as the candidate image and the second image serving as the candidate image is to be presented, when the candidate image is determined to be presented, and the controlling includes controlling presenting the first image or the second image as the candidate image, according to the determining, when the candidate image is to be presented.

According to the aspect described above, in the information processing method, based on the details of the operation performed on the device the plurality of times in the past, the image including a single candidate or the image including a plurality of candidates is determined to be used as the candidate image and is presented. The tendency of the device operation of the user is reflected on the details of the operation performed on the device the plurality of times in the past, and thus by the information processing method described above, it is possible to present, to the user, an appropriate image corresponding to the tendency of the device operation of the user. As described above, in the information processing method, it is possible to present appropriate details of presentation to the user.

Preferably, for example, the information processing method further includes: acquiring first information on conditions under which the first operation has been performed the plurality of times and second information on a condition under which the second operation is to be performed, and in the determining, the candidate image or the input field image is determined as the image by comparing the first information and the second information.

According to the aspect described above, in the information processing method, by further comparing the conditions under which the operation has been performed the plurality of times in the past and the condition under which the operation is to be performed, it is possible to present, to the user, an appropriate image corresponding to the tendency of the device operation of the user. Hence, in the information processing method, with consideration given to the conditions under which the operation is performed, it is possible to present appropriate details of presentation to the user.

Preferably, for example, the information processing method further includes: acquiring a time for which the device can be programmed, and when the candidate image is to be displayed, from candidates for the second operation each being the candidate for the second operation, a candidate for the second operation that falls outside the time for which the device can be programmed is excluded, and the candidate image including a candidate for the second operation which remains after the exclusion is displayed.

According to the aspect described above, in the information processing method, by further using the time during which the operation can be performed by programming the device, it is possible to present, to the user, an appropriate image corresponding to the tendency of the device operation of the user. Hence, in the information processing method, with consideration given to the time during which the operation can be performed by programming the device, it is possible to present appropriate details of presentation to the user.

Preferably, for example, the determining is made according to a characteristic of a user interface (UI) included in a device which presents the image.

According to the aspect described above, in the information processing method, by further using the characteristic of the user interface included in the device, it is possible to present, to the user, an appropriate image corresponding to the tendency of the device operation of the user. Hence, in the information processing method, with consideration given to the characteristic of the user interface included in the device, it is possible to present appropriate details of presentation to the user.

An information processing device according to an aspect of the present disclosure is an information processing device which includes: a processor; and a memory, and, using the memory, the processor: acquires device information and operation information in association with each other, the device information being information on a device, the operation information indicating details of a first operation performed on the device a plurality of times, determines, based on the details of the first operation indicated in the operation information, which one of a candidate image and an input field image is to be selected as an image to be presented to a user, the candidate image including a candidate for a second operation to be performed on the device, the input field image including an input field for a detail of the second operation, and controls presenting the image to the user according to the determining.

According to the aspect described above, the same effects as in the information processing method are achieved.

A program according to an aspect of the present disclosure is a program for causing a computer to execute the information processing method described above.

According to the aspect described above, the same effects as in the information processing method are achieved.

Embodiments will be described in detail below with reference to drawings as necessary. However, an excessively detailed description may be omitted. For example, the detailed description of an already known matter and the repeated description of substantially the same configuration may be omitted. This is intended for avoiding unnecessary redundancy of the following description to facilitate the understanding of a person skilled in the art.

The inventor(s) provides the accompanying drawings and the following description so that the person skilled in the art fully understands the present disclosure, and they are not intended to limit the subject matter of claims.

### (Embodiment 1)

In the present embodiment, an information processing method and an information processing system which present appropriate details of presentation to a user will be described. The information processing system described above is also referred to as device operation setting proposal system 1.

FIG. 1 is a diagram schematically showing an overall configuration of device operation setting proposal system 1 in the present embodiment.

As shown in FIG. 1, device operation setting proposal system 1 includes device 100, server 200, and terminal 300, and they can communicate with each other via a network.

Terminal 300 displays proposal information for operation setting information to the user. The operation setting information is information which sets an operation for causing device 100 to perform processing. Terminal 300 can also be referred to as a display terminal. Terminal 300 is, for example, a smart phone, a tablet terminal, a computer, a smart speaker, or the like.

Server 200 collects logs and prepares a proposal for the operation setting information. Server 200 can also be referred to as an information management server. Server 200 is a computer, and may be on a cloud or in on-premises.

Device 100 is a device which serves as a target to be operated by the user, and performs the processing according to the operation setting information. Device 100 is, for example, a washer, an autonomous mobile vacuum cleaner, a range, or the like. When device 100 is a washer, the processing described above includes processing for washing or drying in various courses. When device 100 is an autonomous mobile vacuum cleaner, the processing described above includes processing for cleaning in various movement modes. When device 100 is a range, the processing described above includes processing for warming or cooking food in various modes.

FIG. 2 is a block diagram of device operation setting proposal system 1 in the present embodiment.

As shown in FIG. 2, device 100 includes inputter 101, display 102, setting receiver 103, device controller 104, and log transmitter 105.

Inputter 101 receives, from the user, an operation performed on device 100. Examples of inputter 101 include buttons, a remote controller, a touch panel and the like.

Display 102 displays the state of device 100. Display 102 is assumed to be visually recognized by the user. Examples of display 102 include a lamp, a display, and the like.

Setting receiver 103 receives the operation setting information for device 100 via the network.

Device controller 104 performs the processing in device 100 based on the operation setting information received in inputter 101 or setting receiver 103.

Log transmitter 105 transmits, as a log, a device operation history indicating the processing performed in device controller 104 via the network to log manager 203 of server 200.

As shown in FIG. 2, server 200 includes, as functionalizers, user manager 201, device manager 202, log manager 203, and proposal manager 204. A processor (not shown) included in server 200 uses a memory (not shown) to execute predetermined programs, and thus the functionalizers included in server 200 can be realized. Server 200 is also referred to as an information processing device.

User manager 201 stores and manages user information.

Device manager 202 stores and manages device information on device 100 such that the device information is associated with the user.

Log manager 203 stores, for each device 100, device operation information transmitted from log transmitter 105 in device 100.

Proposal manager 204 analyzes the tendency of the device operation of the user based on the device operation information stored in log manager 203 for each device 100, and classifies users into groups. Proposal manager 204 generates, based on the classification described above, proposal information on an appropriate device operation setting, and transmits the generated proposal information to terminal 300.

As shown in FIG. 2, terminal 300 includes proposal receiver 301, display 302, inputter 303, and setting transmitter 304.

Proposal receiver 301 receives the proposal information transmitted from proposal manager 204 in server 200 and classification information indicating the groups into which the users are classified based on the tendency of the device operation of the users.

Display 302 determines a proposal method based on the classification information of the users received in proposal receiver 301, and presents the proposal information by the determined proposal method. Examples of display 302 include a display and the like.

Inputter 303 receives an input of selection information on the device operation setting determined by the user from the proposal information displayed on display 302 in terminal 300. Examples of inputter 303 include a touch panel and the like.

Setting transmitter 304 transmits the selection information input in inputter 303 of terminal 300 to device 100 via the network.

As long as the processing performed in display 302 of terminal 300 is carried out by a presentation method capable of presenting the information to the user, for example, sound may be used instead of the display.

FIGS. 3A, 3B, and 3C are data configuration views of device operation setting proposal system 1 in the present embodiment.

The classification table of the users shown in FIG. 3A is used for the proposal in order to classify the user, and is periodically updated as the result of analysis using the device usage ratio table (see FIG. 3B) of the user. One entry (that is, one row) included in the classification table of the users includes a user ID, the classification of the user based on the tendency of the device operation, and the proposal method corresponding to the classification. The classification table of the users includes classifications for all the users who utilize device operation setting proposal system 1.

The device usage ratio table of the user shown in FIG. 3B is used both when the tendency of the device operation of the user is analyzed and when the proposal is generated for the user, and is periodically updated based on the device operation history collected from device 100. One entry included in the device usage ratio table of the user includes, for each user, a detail of the device operation and a ratio of the detail of the device operation to all the details of the device operation. More specifically, the detail of the device operation can include a course indicating the type of operation of device 100 and a time during which device 100 has been operated. The device usage ratio table of the user includes device usage ratios for all the users who utilize device operation setting proposal system 1. FIG. 3B shows, as an example, a device usage ratio table for user 1.

Proposal data for the users shown in FIG. 3C is details of proposals which are presented to the users, and is generated based on the device usage ratio table (see FIG. 3B) of the user and the classification table (see FIG. 3A) of the users with a proposal request for server 200 being used as a trigger. One entry included in the proposal data for the users includes the user ID, the proposal method, and details of proposals. The details of proposals can include one or more proposals in descending order of the ratio of the details of the operation of the user. Since the proposal data for the users is generated based on the proposal request, the number of proposals included in the details of proposals differs for each user. In FIG. 3C, the details of proposals include three proposals of proposal 1, proposal 2, and proposal 3.

An example of the processing of device operation setting proposal system 1 in the present embodiment will be described below.

FIG. 4 is a sequence diagram of device operation setting proposal system 1 in the present embodiment. FIG. 5 is a flow diagram showing processing when server 200 performs log analysis in the present embodiment. FIG. 6 is a flow diagram showing processing when server 200 performs proposal generation in the present embodiment. FIG. 7 is a flow diagram showing processing when terminal 300 displays a proposal in the present embodiment.

The analysis of the tendency of the device operation of the user will be described with reference to FIGS. 4 to 7. The analysis of the tendency of the device operation of the user is processing which is assumed to be performed when the device operation setting is proposed for the user and is periodically performed.

In step S101, device 100 transmits, as needed, a log indicating an operation performed by the user via the network to server 200. Server 200 receives the log transmitted from device 100 to collect the device operation history. The transmitted log can be used for analysis when the operation setting information is proposed.

In step S200, server 200 uses the device operation history collected in step S101 to classify the user based on the tendency of the device operation. The classification based on the tendency of the device operation can be a criterion for changing the proposal method.

Detailed processing included in step S200 will be described with reference to FIG. 5.

In step S201, for the device operation history collected in step S101, proposal manager 204 of server 200 collects details of the operation for each device 100 associated with the user from information stored in user manager 201 and device manager 202 in units of operations that can be performed by the user.

In step S202, proposal manager 204 of server 200 converts, for each user, the details of the operation for device 100 collected in step S201 to ratios to all the details of the device operation, and the ratios are stored as the device usage ratio table (see FIG. 3B).

In step S203, proposal manager 204 of server 200 branches the processing based on the tendency of the device usage ratios. Specifically, when the ratio of one type of detail of the operation is remarkably high in the tendency of the device usage ratios for the user, proposal manager 204 proceeds to step S204, when the total ratio of a plurality of types of details of the operation exceeds 50%, proposal manager 204 proceeds to step S205, and in cases other than the cases described above, proposal manager 204 proceeds to step S206.

In step S204, proposal manager 204 classifies the user as group A.

In step S205, proposal manager 204 classifies the user as group B.

In step S206, proposal manager 204 classifies the user as group C.

In step S207, proposal manager 204 stores the result of the classification in step S204, S205, or S206 as the classification table (see FIG. 3A) of the users. The stored classification table is used when the proposal is displayed.

For the classification into the groups, any method of using a specific rule or a threshold value to classify the users into two or more groups can be adopted. In step S203, 50% which serves as the threshold value for proceeding to step S205 is only an example, and the threshold value is not limited to 50%.

With reference back to FIG. 4, after the classification of the user in step S200, in step S102, terminal 300 transmits the proposal request to server 200. The proposal request is information for requesting terminal 300 to transmit the proposal data, and includes at least information (which is also referred to as the user information) which can uniquely identify the user who uses terminal 300.

In step S300, server 200 performs processing for generating the proposal.

Detailed processing included in step S300 will be described with reference to FIG. 6.

In step S301, proposal manager 204 of server 200 receives the proposal request transmitted by terminal 300 in step S102. The received proposal request includes the user information of the user.

In step S302, proposal manager 204 references the classification table (see FIG. 3A) of the users based on the reception of the proposal request in step S301, and thereby acquires the classification of the user indicated in the user information described by the proposal request.

In step S303, proposal manager 204 references the device usage ratio table (see FIG. 3B) to acquire the details of the device operation of the user and the ratios thereof, and acquires a predetermined number (for example, three) of details of the device operation whose ratios are higher than the others.

In step S304, proposal manager 204 transmits, as the proposal data (see FIG. 3C) for the user, to terminal 300, the classification of the user and the details of the device operation acquired in step S303.

The transmission of the classification table of the users and the proposal data in step S304 corresponds to step S103 in FIG. 4.

With reference back to FIG. 4, after the generation of the proposal in step S300, in step S400, terminal 300 displays the proposal.

Detailed processing included in step S400 will be described with reference to FIG. 7.

In step S401, proposal receiver 301 of terminal 300 receives the proposal data transmitted by server 200 in step S103.

In step S402, display 302 branches the processing according to the classification of the user included in the proposal data received in step S401. Specifically, when the user is classified as group A, display 302 proceeds to step S403, when the user is classified as group B, display 302 proceeds to step S404, and when the user is classified as group C, display 302 proceeds to step S405.

In step S403, display 302 displays the proposal information in a single-choice form. The single-choice form refers to a proposal method for presenting a single choice for the operation. When a single choice is presented in a single-choice form, an operation as to whether device 100 is caused to perform the operation related to the presented single choice is received from the user. An image displayed by display 302 in step S403 is one of candidate images, and more specifically, corresponds to a first image including a single candidate for the operation performed by device 100. The single-choice form can also be referred to as a fixed form. This is because a single operation which is fixed is presented.

In step S404, display 302 displays the proposal information in a multiple-choice form. The multiple-choice form refers to a proposal method for presenting a plurality of choices for the operation. When choices are presented in a multiple-choice form, an operation as to which one of the operations related to the presented choices device 100 is caused to perform is received from the user. An image displayed by display 302 in step S404 is one of candidate images, and more specifically, corresponds to a second image including a plurality of candidates for the operation performed by device 100.

In step S405, display 302 displays the proposal information in an input form. The input form refers to a proposal method for presenting an input field for the operation. In an input form, no choice is presented. When an input field is presented in an input form, an operation of inputting specific details of the operation into the input field is received from the user. An image displayed by display 302 in step S405 corresponds to an input field image.

In step S406, inputter 303 receives an input of the operation setting information produced by the user for the display in step S403, S404, or S405. When inputter 303 receives the input of the operation setting information, inputter 303 transmits the operation setting information to device 100 via the network through server 200. Device 100 performs processing according to the transmitted operation setting information. The transmission of the operation setting information corresponds to step S104 shown in FIG. 4.

With reference back to FIG. 4, in step S105, server 200 receives the operation setting information transmitted in step S104, and transmits, to terminal 300, notification that the operation setting information is received.

In step S106, server 200 transmits, to device 100, the operation setting information received in step 105.

In step S500, device 100 performs, based on the operation setting information transmitted in step S106, processing indicated in the device operation setting.

The processing of device operation setting proposal system 1 will be described in detail below using a specific example.

For example, when in step S203 of FIG. 5, user 1 is classified as group A, in step S207, information that user 1 is classified as group A is stored.

After step S207 is performed, the reception of the proposal request in step S301 of FIG. 6 is used as a trigger, and in step S302, the information that user 1 is classified as group A is acquired from the classification table (see FIG. 3A) of the users.

Thereafter, in step S303, proposal manager 204 acquires, from the device usage ratio table (see FIG. 3B) of user 1, three types of details of device usage whose device operation ratios are higher than the others, that is, "washing_recommendation course, 6:00 to 7:00", "drying_ recommendation course, 7:00 to 8:00", and "washing_my style course, 17:00 to 18:00". In step S304, proposal manager 204 associates the classification of the user acquired in step S302 with the three types of details of the device operation acquired in step S303, and transmits them to terminal 300 as the proposal data (see FIG. 3C) for the user.

Terminal 300 acquires the classification of the user and the proposal data, and since user 1 is classified as group A in step S402, terminal 300 displays the proposal data in a single-choice form. The user is assumed to visually recognize the displayed proposal data, determine the detail of the operation, and input it to terminal 300. Inputter 303 receives the input produced by the user (step S406), and transmits the input operation setting information to device 100, and device 100 performs the processing.

Although in the above description, proposal manager 204 classifies the user based on the tendency of the device operation of the user, proposal manager 204 may classify device 100 based on the tendency of the device operation of the user. In such a case, the classification table (see FIG. 3A) includes a device ID instead of the user ID, and the classification of the device is recorded. Proposal manager 204 further includes information that the user is associated with device 100, and provides a proposal for device 100 to the user associated with device 100.

### (Embodiment 2)

In the present embodiment, other forms of the information processing method and the information processing system which present appropriate details of presentation to the user will be described.

When the users use device 100, even in the same user, the tendency of utilization of the device may differ depending on the condition (specifically, the day of the week, weather, or the time of day) such as an environment or a time.

Hence, in the present embodiment, for each condition, the user is classified with consideration given to the tendency of the device operation, and thus the operation setting information is proposed for the user. More specifically, first information on conditions under which the operation has been performed a plurality of times in the past and second information on a condition under which the operation is to be performed are acquired, and an image to be presented is determined by comparing the first information and the second information.

In the present embodiment, data configurations, processing at the time of log analysis, and processing when the proposal is generated differ from those in Embodiment 1.

The data configuration views, the processing at the time of log analysis, and the processing when the proposal is generated in the present embodiment will be described.

FIGS. 8A, 8B, and 8C are data configuration views of device operation setting proposal system 1 in the present embodiment.

The classification table of the user shown in FIG. 8A is used for the proposal in order to classify display methods for each condition (specifically, the day of the week, weather, or the time of day) such as an environment or a time, and is periodically updated as the result of analysis using the device usage ratio table (see FIG. 8B) of user 1. One entry included in the classification table of the user includes the user ID, the classification of the user based on the tendency of the device operation of the user, the proposal method corresponding to the classification, and the condition when device 100 is used.

The device usage ratio table of user 1 shown in FIG. 8B is used both when the tendency of the device operation of the user is analyzed and when the proposal is generated for the user, and is periodically updated based on the device operation history collected from device 100. One entry included in the device usage ratio table of user 1 includes, for the user, a detail of the device operation under each condition and a ratio of the detail of the device operation to all the details of the device operation. More specifically, the details of the device operation can include a course indicating the type of operation of device 100 and a time during which device 100 is operated. The device usage ratio table of the user includes device usage ratios for all the users who utilize device operation setting proposal system 1. FIG. 8B shows device usage ratios when the day of the week serving as an example of the condition is Tuesday.

Proposal data for the user shown in FIG. 8C is details of proposals which are presented to the user, and is generated based on the device usage ratio table (see FIG. 8B) of the user and the classification table (see FIG. 8A) of the user with the proposal request for server 200 being used as a trigger.

An example of the processing of device operation setting proposal system 1 in the present embodiment will be described below.

The steps which are not described are the same as in the processing of Embodiment 1.

FIG. 9 is a flow diagram showing processing when server 200 performs log analysis in the present embodiment. The processing shown in FIG. 9 indicates detailed processing included in step S200 (see FIG. 4) of Embodiment 1.

In step S211 shown in FIG. 9, for the device operation history collected in step S101, proposal manager 204 of server 200 collects, for each condition, details of the operation for each device 100 associated with the user from information stored in user manager 201 and device manager 202 in units of operations that can be performed by the user.

In steps S212 to S216, proposal manager 204 classifies, for each condition, the user as group A, B, or C as in steps S202 to S206 of Embodiment 1.

In step S217, proposal manager 204 stores the result of the classification in step S214, S215, or S216 as the classification table (see FIG. 8A) of the user for each condition. The stored classification table is used when the proposal is displayed.

FIG. 10 is a flow diagram showing processing when device operation setting proposal system 1 performs proposal generation in the present embodiment.

The processing shown in FIG. 10 indicates detailed processing included in step S300 (see FIG. 4) of Embodiment 1.

In step S311, proposal manager 204 of server 200 receives the proposal request for a certain user transmitted by terminal 300 in step S102. The received proposal request includes the user information of the user and condition information indicating a condition.

In step S312, proposal manager 204 compares, based on the reception of the proposal request in step S311, the conditions included in the classification table (see FIG. 8A) of the user and the condition indicated in the condition information included in the proposal request for the user indicated in the user information described by the proposal request. Then, among the conditions included in the classification table (see FIG. 8A) of the user, the classification corresponding to the condition indicated in the condition information included in the proposal request is acquired.

In step 313, proposal manager 204 acquires, from the device usage ratio table (see FIG. 8B), the data of the user corresponding to the condition included in the proposal request.

In step S314, proposal manager 204 extracts, from the data acquired in step S313, several types whose device operation ratios are higher than the others.

In step S315, proposal manager 204 transmits, to terminal 300, the classification of the user and a plurality of details of the device operation extracted in step S314 as the proposal data (see FIG. 8C) for the user.

The processing of device operation setting proposal system 1 will be described in detail below using a specific example.

For example, when in step S211 of FIG. 9, for Tuesday, user 1 is classified as group B, in step S217, information that user 1 is classified as group B is stored.

After step S217 is performed, the reception of the proposal request in step S311 of FIG. 10 is used as a trigger, and in step S312, the information that user 1 is classified as group B for Tuesday is acquired from the classification table (see FIG. 8A) of the user.

Thereafter, in step S313, proposal manager 204 acquires the device usage ratio table (see FIG. 8B) of user 1 for Tuesday. In step S314, proposal manager 204 acquires, from the device usage ratio table (see FIG. 8B) for Tuesday, three types of details of the device operation whose device operation ratios are higher than the others, that is, "washing_recommendation course, 6:00 to 7:00", "drying_ recommendation course, 7:00 to 8:00", and "washing_my style course, 17:00 to 18:00". In step S315, proposal manager 204 associates the classification of the user acquired in step S312 with the three types of details of the device operation acquired in step S314, and transmits them to terminal 300 as the proposal data (see FIG. 8C) for the user.

### (Embodiment 3)

In the present embodiment, other forms of the information processing method and the information processing system which present appropriate details of presentation to the user will be described.

Device 100 can perform processing by a setting (which is referred to as a programming setting or is also simply referred to as programming) for performing the processing in a future time desired by the user. It is likely that, depending on device 100, a time during which the processing can be performed by programming device 100 is limited.

Hence, in the present embodiment, with consideration given to the time during which the operation can be performed by programming device 100, when the device operation setting is proposed for the user, a determination for excluding details of the device operation is performed. In this way, a candidate for the operation that falls outside the time during which the operation can be performed by programming device 100 is excluded from candidates for the operation of device 100, and a candidate image including the remaining candidate is displayed.

In the present embodiment, data configurations and processing when the proposal is generated differ from those in Embodiment 2.

The data configuration views and the processing when the proposal is generated in the present embodiment will be described.

FIGS. 11A, 11B, 11C, and 11D are illustrative views showing data configurations of device operation setting proposal system 1 in the present embodiment.

The classification table shown in FIG. 11A and the device usage ratio table shown in FIG. 11B are the same as in Embodiment 2.

FIG. 11C is a third illustrative view showing the data configuration of device operation setting proposal system 1 in the present embodiment.

Programmable time data shown in FIG. 11C indicates the time during which the operation can be performed by programming device 100, and indicates a different available time for each method of using the device, for example, for each course.

Proposal data for the user shown in FIG. 11D is details of proposals which are displayed for the user, and is generated based on the device usage ratio table (see FIG. 11B) of the user, the classification table (see FIG. 11A) of the user, and the programmable time data (see FIG. 11C) with the proposal request for server 200 being used as a trigger, and indicates the details of the operation of device 100 for which the user can perform a programming operation.

FIG. 12 is a flow diagram showing processing for the proposal generation of device operation setting proposal system 1 in the present embodiment.

The processing shown in FIG. 12 indicates detailed processing included in step S300 (see FIG. 4) of Embodiment 1. The processing for the proposal generation shown in FIG. 12 is similar to the processing for the proposal generation shown in FIG. 10. In the processing for the proposal generation shown in FIG. 12, for processing which is the same as the processing for the proposal generation shown in FIG. 10, the detailed description thereof is omitted.

Processing in steps S321 to S324 is the same as the processing in steps S311 to S314 of FIG. 10.

In step S325, proposal manager 204 references the information of the programmable time data (see FIG. 11C) to extract, from the details of the device operation acquired in step S324, details of the operation of device 100 for which the programmable operation can be performed. In other words, proposal manager 204 excludes, from the details of the device operation acquired in step S324, the details of the device operation which fall outside the available time.

In step S326, proposal manager 204 transmits, to terminal 300, the classification of the user extracted in step S322 and the details of the device operation extracted in step S325 as the proposal data (see FIG. 11D) for the user.

For example, when a date and time which is displayed in the proposal for user 1 is 6:00 on Tuesday, as in Embodiment 2, in step S323, the device usage ratios for user 1 on Tuesday are extracted. In step S324, proposal manager 204 acquires, from FIG. 11B, details of the device operation in descending order of the ratio of the device operation, and compares them with the programmable time data (see FIG. 11C) in step S325.

By this comparison, proposal manager 204 excludes "washing_recommendation course, 6:00 to 7:00" and "drying_ recommendation course, 7:00 to 8:00" which are not programmable at 6:00, and maintains "washing_my style course, 17:00 to 18:00" and "washing/drying_recommendation course, 21:00 to 22:00".

In step S326, proposal manager 204 transmits, to terminal 300, the classification of the user acquired in step S322 and the details of the device operation maintained in step S325 as the proposal data (see FIG. 11D) for user 1.

### (Embodiment 4)

In the present embodiment, other forms of the information processing method and the information processing system which present appropriate details of presentation to the user will be described.

When terminal 300 displays the proposal, schedule information of the user is utilized, and thus it is possible to propose a more accurate device operation setting.

Hence, in the present embodiment, when the device operation setting is proposed for the user, the schedule information of the user is utilized, and thus a determination for excluding details of the device operation is performed.

In the present embodiment, a sequence, data configurations, and processing when the proposal is generated differ from those in Embodiment 3.

The sequence diagram, the data configurations, and the processing when the proposal is generated in the present embodiment will be described.

FIG. 13 is the sequence diagram of device operation setting proposal system 1 in the present embodiment.

The processing shown in FIG. 13 is similar to the processing (see FIG. 4) of device operation setting proposal system 1 in Embodiment 1. In the processing shown in FIG. 13, for processing which is the same as the processing of device operation setting proposal system 1 in Embodiment 1, the detailed description thereof is omitted.

In steps S111 and S200, server 200 classifies the user based on the tendency of the device operation.

In step S112, terminal 300 sets and transmits schedule information indicating the schedule of the user. The setting of the schedule information can be performed by receiving an operation for the schedule of the user with, for example, an application which is operated on terminal 300.

In step S113, server 200 receives the schedule information received in step S112. User manager 201 of server 200 manages the received schedule information. Server 200 notifies terminal 300 of information that the reception is completed.

In step S114, terminal 300 transmits the proposal request to server 200.

In step S300A, server 200 performs processing for generating the proposal. Although the processing in step S300A is similar to the processing in step S300 of Embodiment 1, the processing in step S300A differs from the processing in step S300 of Embodiment 1 in that consideration is given to the schedule information received in step S112.

Processing in steps S115 to S118 is the same as the processing in steps S103 to S106 (see FIG. 4) of Embodiment 1.

FIGS. 14A, 14B, 14C, 14D, and 14E are illustrative views showing data configurations of device operation setting proposal system 1 in the present embodiment.

The data configurations in FIGS. 14A to 14C are the same as the data configurations (that is, those in FIGS. 11A to 11C) in Embodiment 3.

The schedule information of the user shown in FIG. 14D is information indicating the schedule of the user. Specifically, the schedule information includes a date, a time, and the information of the schedule. The schedule is an action which is scheduled to be performed by the user at that time on that day, an action which prevents the operation of device 100 when the action is taken is included, and the action can be set to, for example, sleeping, going out, or the like.

Proposal data for the user shown in FIG. 14E is the detail of a proposal which is displayed for the user, and is generated based on the device usage ratio table (see FIG. 14B) of the user, the classification (see FIG. 14A) of the user, the programmable time data (see FIG. 14C), and the schedule information (see FIG. 14D) with the proposal request for server 200 being used as a trigger, and indicates the detail of the operation of device 100 for which the user can perform the programming operation.

FIG. 15 is a flow diagram showing processing for the proposal generation of device operation setting proposal system 1 in the present embodiment.

The processing shown in FIG. 15 indicates detailed processing included in step S300 (see FIG. 4) of Embodiment 1. The processing for the proposal generation shown in FIG. 15 is similar to the processing for the proposal generation shown in FIG. 12. In the processing for the proposal generation shown in FIG. 15, for processing which is the same as the processing for the proposal generation shown in FIG. 12, the detailed description thereof is omitted.

Processing in steps S331 to S335 is the same as the processing in steps S321 to S325 of FIG. 12.

In step S336, proposal manager 204 references the schedule information (see FIG. 14D) of the user to exclude, from the remaining details of the device operation after being excluded in step S335, the details of the device operation the scheduled times of which overlap the schedule of the user.

In step S337, proposal manager 204 transmits, to terminal 300, the classification of the user extracted in step S332 and the remaining details of the device operation after being excluded in step S336 as the proposal data (see FIG. 14E) of the user.

For example, when a date and time at which the proposal for user 1 is displayed is 6:00 on January 1st, 2020 (Tuesday), as in Embodiment 3, after step S335 is performed, "washing_my style course, 17:00 to 18:00" and "washing/drying_recommendation course, 21:00 to 22:00" are left as the available operations. In step S336, proposal manager 204 associates "washing/drying_recommendation course, 21:00 to 22:00" which does not overlap the schedule of user 1 with the classification of the user, and transmits it to terminal 300 as the proposal data (see FIG. 14E) for user 1 (step S337).

### (Embodiment 5)

In the present embodiment, other forms of the information processing method and the information processing system which present appropriate details of presentation to the user will be described.

Although in Embodiments 1 to 4, terminal 300 is provided separately of device 100 as the terminal for displaying the proposal of the device operation setting for the user and receiving an input, device 100 may include the function of the terminal described above.

The configuration as mentioned above will be described in the present embodiment. Specifically, in the present embodiment, a system configuration, a block diagram, and a sequence differ from those in Embodiments 1 to 4.

The system configuration view, the block diagram, and the sequence diagram in the present embodiment will be described.

FIG. 16 is a diagram schematically showing an overall configuration of device operation setting proposal system 1A in the present embodiment.

In FIG. 16, device operation setting proposal system 1A includes device 100A and server 200, and they can communicate with each other via a network.

Device 100A is a device which serves as a target to be operated by the user. Device 100A can communicate via the network, can display the proposal from server 200, and can receive an input from the user. Device 100A is, for example, a washer, an autonomous mobile vacuum cleaner, a range, or the like.

Server 200 collects logs and proposes the device operation setting. Server 200 may be on a cloud or in on-premises as in Embodiments 1 to 4.

In the present embodiment, device 100A which is different from device 100 in Embodiments 1 to 4 will be particularly described below.

FIG. 17 is a block diagram of device operation setting proposal system 1A in the present embodiment.

In FIG. 17, device 100A includes inputter 101, display 102, setting receiver 103, device controller 104, log transmitter 105, and proposal receiver 106. Inputter 101, display 102, setting receiver 103, device controller 104, and log transmitter 105 are the same as in Embodiments 1 to 4.

Proposal receiver 106 of device 100A is the same as proposal receiver 301 included in terminal 300 of Embodiment 1. Specifically, proposal receiver 106 receives the proposal information transmitted by proposal manager 204 of server 200 and the classification information indicating the groups into which the users are classified based on the tendency of the device operation of the users. The received proposal information is displayed on display 102 of device 100A based on the received classification information, and the selection of the details of proposals or the input of the device operation setting is performed in inputter 101.

FIG. 18 is a sequence diagram in the present embodiment. Step S121 can be the same as in Embodiment 1 and the like.

The details of communication in steps S122 and S123 are respectively the same as the details of communication in steps S102 and S103 of Embodiment 1 and the like. Since device 100A includes proposal receiver 106, the present embodiment differs from Embodiment 1 and the like in that device 100A communicates with server 200.

After the communication in step S123, device 100A performs display (step S400) and processing (step S500).

Since a device operation is directly performed on device 100A, communication (step S106 in Embodiment 1 and the like) for the device operation is not performed.

### (Embodiment 6)

In the present embodiment, other forms of the information processing method and the information processing system which present appropriate details of presentation to the user will be described.

In the present embodiment, a case where a relationship between device 100 and terminal 300 is not a ratio of 1:1 but a ratio of n:m (where n is an integer of 1 or more and m is an integer of 1 or more) will be described. Here, a proposal method is determined according to the characteristic of a user interface (UI) included in terminal 300, and thus it is possible to more reduce the burden of the user.

FIG. 19 is a diagram schematically showing an overall configuration of device operation setting proposal system 1B in the present embodiment.

In FIG. 19, device operation setting proposal system 1B includes a plurality of devices 100 (devices 100A and 100B in FIG. 19), server 200, and a plurality of terminals 300 (terminals 310A, 310B, and 310C in FIG. 19). The plurality of devices 100, server 200, and the plurality of terminals 300 can communicate with each other via a network.

The configuration shown in FIG. 19 corresponds to a configuration in which, for example, one user possesses one terminal 300 that can display or input a proposal and a plurality of devices 100 that serve as targets to be operated by the user and can communicate via the network.

In the present embodiment, proposal manager 204 manages the sizes (for example, the dimensions, the number of pixels, or the resolutions of the display screens) of the display screens of displays 302 which are UIs included in the plurality of terminals 300.

In the configuration shown in FIG. 19, for example, since the display screen of display 302 of terminal 310A is relatively small, it may be difficult to display a plurality of proposals to cause the user to visually recognize them. Whether it is difficult to cause the user to visually recognize the proposals can be determined based on information on the sizes of the display screens managed by proposal manager 204. For example, when the display screen does not have a sufficient number of pixels for displaying the proposals or when the display screen has a sufficient number of pixels for displaying the proposals but displayed characters are not large enough to be visually recognized by the user, it can be determined that it is difficult to cause the user to visually recognize the proposals. In such a case, for example, proposal manager 204 may adopt a proposal method in a single-choice form.

Proposal manager 204 also manages the input functions of inputters 303 included in the plurality of terminals 300 (for example, which one of touch input to the screen, character input using a keyboard, and the pressing down of a dedicated button is the form of input).

In the configuration shown in FIG. 19, for example, the form of input of inputter 303 in terminal 310A may be a form in which it is possible to input only "OK" or "cancel" to a question from terminal 310A, that is, a form in which it is impossible to input characters using a keyboard. Whether it is possible to input only "OK" or "cancel" can be determined based on information on the form of input managed by proposal manager 204. For example, when the form of input is the pressing down of a dedicated button, it can be determined that it is possible to input only "OK" or "cancel". In such a case, for example, proposal manager 204 may adopt, as the proposal method, a countermeasure method other than an input form (that is, a configuration may be used in which proposal manager 204 does not need to adopt an input form).

FIG. 20 is an illustrative view showing samples of the proposal made by device operation setting proposal system 1, 1A, or 1B (which is also referred to as device operation setting proposal system 1 or the like) in the present embodiment.

As shown in FIG. 20, device operation setting proposal system 1 or the like proposes the operation of device 100 in a single-choice form for a user (who is described as a "user who always uses the same usage method" in FIG. 20) classified as group A.

Device operation setting proposal system 1 or the like proposes the operation of device 100 in a multiple-choice form for a user (who is described as a "user who uses the usage methods of a few patterns" in FIG. 20) classified as group B.

Device operation setting proposal system 1 or the like proposes the operation of device 100 in an input form for a user (who is described as a "user who uses different usage methods" in FIG. 20) classified as group C.

In this way, device operation setting proposal system 1 or the like can present appropriate details of presentation to the users.

When in Embodiment 3 or 4, the exclusion processing is performed based on programmable times for device 100 or the schedule information of the user, and thus one detail of proposals is only provided, it may be proposed in a single-choice form. Likewise, when no detail of proposals is provided, the following day (if that day is Tuesday, Wednesday following that day is used) is used as a target, and the proposal flow for the device operation setting is performed again from the beginning, with the result that a proposal may be performed.

Although in Embodiment 2, the data of the device usage ratio table is periodically produced, it is likely that when a season or a holiday is used as a target, the data is produced with any timing.

When the proposal is generated in a single-choice form or an input form, if the user rejects the proposal, a current screen may be guided or transferred to the screen of an input form.

In a single-choice form, when the proposal is generated, device 100 may directly perform, without producing a display, processing corresponding to the operation setting information.

It can be considered that the feedback of the user or the operation setting information after the proposal is made is utilized to enhance the accuracy of the proposal.

A proposal which utilizes push notification such as an application for a smart phone may be used.

Although variations of the embodiments described above will be described below, the present embodiments are not limited to the following description.

### (Variation 1 of Embodiments 1 to 6)

FIG. 21 is an illustrative view showing Variation 1 of Embodiments 1 to 6.

FIG. 21 shows processing in terminal 300.

In step S601, terminal 300 acquires the classification of the user and details of proposals.

In step S602, terminal 300 branches the processing according to the classification of the user which is acquired. When the classification of the user is determined to be group A, the processing proceeds to step S603, when the classification of the user is determined to be group B, the processing proceeds to step S604, and when the classification of the user is determined to be group C, the processing proceeds to step S607.

In step S603, terminal 300 displays the proposal in a single-choice form.

In step S604, terminal 300 displays the proposal in a multiple-choice form.

In step S605, terminal 300 determines whether to receive, from the user, an operation input indicating the rejection of the proposal. When terminal 300 receives, from the user, the operation input indicating the rejection of the proposal, the processing proceeds to step S607, and when this is not the case, the processing proceeds to step S606.

In step S607, terminal 300 displays the proposal in an input form. Thereafter, when terminal 300 determines to receive, from the user, the operation input indicating the rejection of the proposal, terminal 300 displays the proposal in an input form.

In step S606, terminal 300 determines the operation setting information to receive the input.

By a series of processing steps shown in FIG. 21, in device operation setting proposal system 1 or the like, when the proposal is made in a single-choice form or an input form, if the user rejects the proposal, a current screen can be guided or transferred to the screen of an input form.

### (Variation 2 of Embodiments 1 to 6)

FIG. 22 is an illustrative view showing Variation 2 of Embodiments 1 to 6.

FIG. 22 shows processing in terminal 300.

In step S611, terminal 300 acquires the classification of the user and details of proposals.

In step S612, terminal 300 branches the processing according to the classification of the user which is acquired. When the classification of the user is determined to be group A, the processing proceeds to step S615, when the classification of the user is determined to be group B, the processing proceeds to step S613, and when the classification of the user is determined to be group C, the processing proceeds to step S614.

In step S613, terminal 300 displays the proposal in a multiple-choice form.

In step S614, terminal 300 displays the proposal in an input form.

In step S615, terminal 300 determines the operation setting information to receive the input. In other words, when in step S612, the classification of the user is determined to be group A, no display is produced for the user.

By a series of processing steps shown in FIG. 22, in device operation setting proposal system 1 or the like, when the proposal is made in a single-choice form, terminal 300 can perform processing corresponding to the operation setting information without producing a display for the proposal.

### (Variation 3 of Embodiments 1 to 6)

FIGS. 23A to 23E are first to fifth illustrative views showing Variation 3 of Embodiments 1 to 6.

FIGS. 23A to 23E respectively show the classification table of the users, the device usage ratio table of the user, the feedback information of the user, the schedule information of the user, and the proposal data for the users.

The feedback information shown in FIG. 23C is information which is fed back from the user on the evaluation of proposals made by device operation setting proposal system 1 or the like. The evaluation of proposals is an indicator for indicating how appropriate the proposals made by device operation setting proposal system 1 or the like are for the user, and is, for example, indicated by a scale of 11 from -5 to +5.

FIG. 24 is a sixth illustrative view of Variation 3 of Embodiments 1 to 6.

FIG. 24 shows processing in terminal 300, server 200, and device 100.

In step S711, device 100 collects and transmits logs.

In server 200, device 100 is previously registered (step S721).

In step S722, server 200 acquires the logs collected by device 100, calculates the number of patterns based on the device operation history and the feedback information, and classifies the user by the number of patterns which is calculated.

In step S731, terminal 300 starts up an application.

In step S732, terminal 300 transmits a proposal request to server 200. Server 200 acquires the proposal request from terminal 300 which starts up the application.

In step S723, server 200 determines whether the user is a user who always uses the same usage method, and when server 200 determines that the user is a user who always uses the same usage method (yes in step S723), server 200 notifies the result of the determination to terminal 300. Terminal 300 which receives the notification displays the proposal in a single-choice form (step S733).

When in step S723, server 200 determines that the user is not a user who always uses the same usage method (no in step S723), the processing proceeds to step S724.

In step S724, server 200 determines whether the user is a user who uses the usage methods of a few patterns, and when server 200 determines that the user is a user who uses the usage methods of a few patterns (yes in step S724), server 200 notifies the result of the determination to terminal 300. Terminal 300 which receives the notification displays the proposal in a multiple-choice form (step S734).

When in step S724, server 200 determines that the user is not a user who uses the usage methods of a few patterns (no in step S724), server 200 notifies the result of the determination to terminal 300. Terminal 300 which receives the notification displays the proposal in an input form (step S735).

Thereafter, terminal 300 determines the operation setting information and transmits it to server 200 (step S736). Server 200 which receives the operation setting information updates the feedback information based on the operation setting information, and transmits the device operation setting to device 100 (step S725). Device 100 which receives the device operation setting performs the processing (step S712).

### (Variation 4 of Embodiments 1 to 6)

FIG. 25 is a first illustrative view of Variation 4 of Embodiments 1 to 6.

FIG. 25 shows a configuration view. A plurality of terminals 310A to 310N and a plurality of devices 110A to 110N are connected to server 200 and notification server 400 via a network.

Notification server 400 is a server which transmits push notification.

FIG. 26 is a second illustrative view of Variation 4 of Embodiments 1 to 6.

FIG. 26 shows processing in terminal 300, notification server 400, server 200, and device 100. Terminal 300 corresponds to terminals 310A to 310N in FIG. 25. Device 100 corresponds to devices 110A to 110N in FIG. 25.

In FIG. 26, control from server 200 to terminal 300 in FIG. 24 is transmitted using push notification provided by notification server 400 (step S741).

Since the other points are the same as in FIG. 24, the description thereof is omitted.

### (Examples of images in Embodiments 1 to 6)

Examples of images displayed by terminal 300 in Embodiments 1 to 6 will be described below.

FIG. 27 is an illustrative view of image 500 serving as a first example of an image displayed by terminal 300 (that is, display 302) in Embodiments 1 to 6.

Image 500 shown in FIG. 27 is an example of the image displayed by display 302 when terminal 300 presents a choice for the operation in a single-choice form.

Image 500 includes prompt statement 501, setting details 502, reason 503, change button 504, and performance button 505.

Prompt statement 501 is a statement for the user which prompts the user to make a choice for setting an operation indicated in setting details 502.

Setting details 502 are details of processing performed by device 100.

Reason 503 is a reason for proposing setting details 502 as the details of the processing performed by device 100.

Change button 504 is a button for receiving an operation for changing the setting. When the operation of change button 504 performed by the user is received, terminal 300 and/or server 200 may determine that the user rejects the proposal to transfer to a proposal in an input form.

Performance button 505 is a button for receiving the setting of the operation indicated in setting details 502 to device 100. When the operation of performance button 505 performed by the user is received, terminal 300 and/or server 200 sets the operation indicated in setting details 502 to device 100.

FIG. 28 is an illustrative view of image 510 serving as a second example of the image displayed by terminal 300 in Embodiments 1 to 6.

Image 510 shown in FIG. 28 is an example of the image displayed by display 302 when terminal 300 (display 302) presents a choice for the operation in a single-choice form. Image 510 is an example of the image displayed by display 302 when the operation is set to device 100 before the details are confirmed by the user and then a change or a deletion made by the user is received.

Image 510 includes notification statement 511 and setting details 512.

Notification statement 511 is a statement for the user for notifying the user that the operation indicated in setting details 512 is set.

Setting details 512 are details of processing performed by device 100.

FIG. 29 is an illustrative view of a third example of the image displayed by terminal 300 in Embodiments 1 to 6.

Image 520 shown in FIG. 29 is an example of the image displayed by display 302 when terminal 300 presents choices for the operation in a multiple-choice form.

Image 520 includes setting candidates 521, 522, and 523, selection buttons 525, and setting button 527.

Each of setting candidates 521, 522, and 523 indicates details of processing performed by device 100, and indicates a candidate (choice) for the processing performed by device 100. Setting candidates 521, 522, and 523 may be arranged in higher positions as the possibility of selection made by the user is increased.

Selection buttons 525 are buttons for receiving an operation for determining, by the user, which one of setting candidates 521, 522, and 523 is selected.

Setting button 527 is a button for receiving an operation for setting the operation indicated by selection button 525 to device 100. When the operation of setting button 527 performed by the user is received, terminal 300 and/or server 200 sets the operation indicated by selection button 525 to device 100.

FIG. 30 is an illustrative view of a fourth example of the image displayed by terminal 300 in Embodiments 1 to 6.

Image 530 shown in FIG. 30 is an example of the image displayed by display 302 when terminal 300 presents choices for the operation in a multiple-choice form.

Image 530 additionally includes setting candidate 531.

Setting candidate 531 is details of processing performed by device 100, and indicates, as a choice, the details of processing which are different from those in setting candidates 521, 522, and 523 shown in FIG. 29.

When terminal 300 and/or server 200 receives, from the user, an operation for selecting setting candidate 531, terminal 300 and/or server 200 sets the operation indicated in setting candidate 531 to device 100.

FIG. 31 is an illustrative view of a fifth example of the image displayed by terminal 300 in Embodiments 1 to 6.

Image 540 shown in FIG. 31 is an example of the image displayed by display 302 when terminal 300 presents choices for the operation in an input form.

Image 540 includes input fields 541 and 542 and registration button 543.

Input field 541 is an input field for receiving the setting of an operation mode or an operation course for device 100.

Input field 542 is an input field for receiving the setting of a time when the processing of device 100 is completed.

Registration button 543 is a button for receiving an operation for setting details input in input fields 541 and 542 to device 100. When terminal 300 and/or server 200 receives the operation of registration button 543 performed by the user, terminal 300 and/or server 200 sets the operation indicated in input fields 541 and 542 to device 100.

FIG. 32 is an illustrative view of a sixth example of the image displayed by terminal 300 in Embodiments 1 to 6.

Image 550 shown in FIG. 32 is an example of the image displayed by display 302 when terminal 300 presents choices in a single-choice form or a multiple-choice form.

Image 550 includes processing periods 551 and 554, details of processing 552 and 555, and deletion marks 553 and 556.

Processing period 551 indicates a period during which device 100 performs processing. Processing period 551 indicates, for example, as a figure (rectangle), the period during which device 100 performs the processing.

As with processing period 551, processing period 554 indicates a period during which device 100 performs processing.

Details of processing 552 indicate the details of the processing performed during processing period 551.

Details of processing 555 indicate the details of the processing performed during processing period 554.

Deletion mark 553 is a button for receiving an operation for deleting (cancelling) the processing performed during processing period 551.

Deletion mark 556 is a button for receiving an operation for deleting (cancelling) the processing performed during processing period 554.

The embodiments have been described above as examples of techniques in the present disclosure. For this purpose, the accompanying drawings and the detailed descriptions are provided.

Hence, constituent elements in the accompanying drawings and the detailed descriptions can include not only constituent elements which are essential for solving the problem but also constituent elements which are not essential for solving the problem and are intended for illustrating the implementation described above. Therefore, just because the constituent elements which are not essential are included in the accompanying drawings and the detailed descriptions, it should not be assumed that the constituent elements which are not essential are essential.

Since the embodiments are described above as examples of techniques in the present disclosure, various changes, replacements, additions, omissions, and the like can be performed without departing from the scope of claims.

### [Industrial Applicability]

The present disclosure can be applied to a device which supports an operation performed by a user on a device operated via a network.

### [Reference Signs List]

1, 1A, 1B device operation setting proposal system
100, 100A, 110A, 110B, 110N device
101, 303 inputter
102, 302 display
103 setting receiver
104 device controller
105 log transmitter
106, 301 proposal receiver
200 server
201 user manager
202 device manager
203 log manager
204 proposal manager
300, 310A, 310B, 310C, 310N terminal
304 setting transmitter
400 notification server
500, 510, 520, 530, 540, 550 image
501 prompt statement
502, 512 setting details
503 reason
504 change button
505 performance button
511 notification statement
521, 522, 523, 531 setting candidate
525 selection button
527 setting button
541, 542 input field
543 registration button
551, 554 processing period
552, 555 details of processing
553, 556 deletion mark

## Claims

1. An information processing method comprising:
acquiring from a server (200) device information and operation information in association with each other, the device information being information on a device (100) that is connected to the server (200) via a network and is operated by a user via the network, the operation information indicating details of a first operation performed on the device a plurality of times;
determining, based on the details of the first operation indicated in the operation information, which one of a candidate image and an input field image is to be selected as an image to be presented to a user on a user terminal (300) connected to the same network and configured to operate the device (100), the candidate image including a candidate for a second operation to be performed on the device (100) and comprising an image that includes a single choice form or a multiple choice form, the input field image including an input field for a detail of the second operation and comprising an image which receives an operation of inputting in the input field for selecting specific details of the operation from the user; and
controlling presenting the image to the user according to the determining,
wherein, in the determining,
classifying a user depending on a) a total ratio of a plurality of types of details of operation included in the first operation indicated in the operation information exceeds 50 percent, or b) in cases other than a), and determining the candidate image as the image to be presented to the user in case a) and determining the input field image as the image to be presented to the user in cases other than a).

2. The information processing method according to claim 1,
wherein the candidate image is a first image including a single candidate for the second operation or a second image including a plurality of candidates for the second operation each being the candidate for the second operation,
the determining includes determining, based on the details of the first operation indicated in the operation information, which one of the first image serving as the candidate image and the second image serving as the candidate image is to be presented, when the candidate image is determined to be presented, and
the controlling includes controlling presenting the first image or the second image as the candidate image, according to the determining, when the candidate image is to be presented.

3. The information processing method according to claim 1 or 2, further comprising:
acquiring first information on conditions under which the first operation has been performed the plurality of times and second information on a condition under which the second operation is to be performed,
wherein in the determining, the candidate image or the input field image is determined as the image by comparing the first information and the second information.

4. The information processing method according to any one of claims 1 to 3, further comprising:
acquiring a time for which the device (100) can be programmed,
wherein when the candidate image is to be displayed, from candidates for the second operation each being the candidate for the second operation, a candidate for the second operation that falls outside the time for which the device (100) can be programmed is excluded, and the candidate image including a candidate for the second operation which remains after the exclusion is displayed.

5. The information processing method according to any one of claims 1 to 4,
wherein the determining is made according to a characteristic of a user interface (UI) included in a device which presents the image.

6. An information processing device comprising:
a processor; and
a memory,
wherein, using the memory, the processor is adapted to:
acquire from a server (200) device information and operation information in association with each other, the device information being information on a device (100) that is connected to the server (200) via a network and is operated by a user via the network, the operation information indicating details of a first operation performed on the device (100) a plurality of times,
determine, based on the details of the first operation indicated in the operation information, which one of a candidate image and an input field image is to be selected as an image to be presented to a user on a user terminal (300) connected to the same network and configured to operate the device (100), the candidate image including a candidate for a second operation to be performed on the device (100) and comprising an image that includes a single choice form or a multiple choice form, the input field image including an input field for a detail of the second operation and comprising an image which receives an operation of inputting in the input field for selecting specific details of the operation from the user, and
control presenting the image to the user according to the determining
wherein, in the determining, the processor is further adapted to:
classify a user depending on a) a total ratio of a plurality of types of details of operation included in the first operation indicated in the operation information exceeds 50 percent, or b) in cases other than a), and determine the candidate image as the image to be presented to the user in case a) and determine the input field image as the image to be presented to the user in cases other than a).

7. A program for causing a computer to execute the information processing method according to any one of claims 1 to 5.

## Patentansprüche

1. Informationsverarbeitungsverfahren, umfassend:
Erfassen, von einem Server (200), von Geräteinformationen und Bedieninformationen in Verbindung miteinander, wobei die Geräteinformationen Informationen über ein Gerät (100) sind, das mit dem Server (200) über ein Netzwerk verbunden ist und von einem Benutzer über das Netzwerk bedient wird, wobei die Bedieninformationen Einzelheiten einer ersten Bedienung angeben, die mehrmals an dem Gerät durchgeführt wurde;
Bestimmen, auf Basis der in den Bedieninformationen angegebenen Einzelheiten der ersten Bedienung, welches von einem Kandidatenbild und einem Eingabefeldbild als ein Bild ausgewählt werden soll, das einem Benutzer auf einem Benutzerendgerät (300) zu präsentieren ist, welches mit demselben Netzwerk verbunden und dazu konfiguriert ist, das Gerät (100) zu bedienen, wobei das Kandidatenbild einen Kandidaten für eine zweite Bedienung beinhaltet, die an dem Gerät (100) durchgeführt werden soll, und ein Bild umfasst, das eine Einzelauswahlform oder eine Mehrfachauswahlform enthält, wobei das Eingabefeldbild ein Eingabefeld für eine Einzelheit der zweiten Bedienung beinhaltet und ein Bild umfasst, welches eine Eingabebedienung in dem Eingabefeld zum Auswählen spezifischer Einzelheiten der Bedienung von dem Benutzer empfängt; und
Steuern eines Präsentierens des Bildes an den Benutzer gemäß dem Bestimmen,
wobei, beim Bestimmen,
ein Benutzer abhängig davon klassifiziert wird, dass a) ein Gesamtverhältnis einer Mehrzahl von Arten von Einzelheiten der Bedienung, die in der ersten Bedienung, welche in den Bedieninformationen angegeben ist, enthalten sind, 50 Prozent überschreitet, oder b) in Fällen anders als a), und wobei das Kandidatenbild als das Bild, das dem Benutzer zu präsentieren ist, im Fall a) bestimmt wird und das Eingabefeldbild als das Bild, das dem Benutzer zu präsentieren ist, in Fällen anders als a) bestimmt wird.

2. Informationsverarbeitungsverfahren nach Anspruch 1,
wobei das Kandidatenbild ein erstes Bild ist, das einen einzelnen Kandidaten für die zweite Bedienung enthält, oder ein zweites Bild ist, das eine Mehrzahl von Kandidaten für die zweite Bedienung enthält, von denen jeder der Kandidat für die zweite Bedienung ist,
wobei das Bestimmen umfasst, auf Basis der in den Bedieninformationen angegebenen Einzelheiten der ersten Bedienung zu bestimmen, welches von dem ersten Bild, das als das Kandidatenbild dient, und dem zweiten Bild, das als das Kandidatenbild dient, präsentiert werden soll, wenn bestimmt wird, dass das Kandidatenbild präsentiert werden soll, und
wobei das Steuern umfasst, ein Präsentieren des ersten Bildes oder des zweiten Bildes als das Kandidatenbild gemäß dem Bestimmen zu steuern, wenn das Kandidatenbild präsentiert werden soll.

3. Informationsverarbeitungsverfahren nach Anspruch 1 oder 2, weiterhin umfassend:
Erfassen von ersten Informationen über Bedingungen, unter denen die erste Bedienung mehrmals durchgeführt wurde, und von zweiten Informationen über eine Bedingung, unter der die zweite Bedienung durchgeführt werden soll,
wobei beim Bestimmen das Kandidatenbild oder das Eingabefeldbild als das Bild durch Vergleichen der ersten Informationen und der zweiten Informationen bestimmt wird.

4. Informationsverarbeitungsverfahren nach einem der Ansprüche 1 bis 3, weiterhin umfassend:
Erfassen einer Zeit, für die das Gerät (100) programmiert werden kann,
wobei, wenn das Kandidatenbild angezeigt werden soll, aus Kandidaten für die zweite Bedienung, von denen jeder der Kandidat für die zweite Bedienung ist, ein Kandidat für die zweite Bedienung, der außerhalb der Zeit liegt, für die das Gerät (100) programmiert werden kann, ausgeschlossen wird, und das Kandidatenbild, das einen Kandidaten für die zweite Bedienung enthält, welcher nach dem Ausschluss verbleibt, angezeigt wird.

5. Informationsverarbeitungsverfahren nach einem der Ansprüche 1 bis 4,
wobei das Bestimmen gemäß einer Eigenschaft einer Benutzerschnittstelle (UI) erfolgt, die in einem Gerät enthalten ist, das das Bild präsentiert.

6. Informationsverarbeitungsvorrichtung, umfassend:
einen Prozessor; und
einen Speicher,
wobei der Prozessor, unter Verwendung des Speichers, dazu eingerichtet ist:
von einem Server (200) Geräteinformationen und Bedieninformationen in Verbindung miteinander zu erfassen, wobei die Geräteinformationen Informationen über ein Gerät (100) sind, das mit dem Server (200) über ein Netzwerk verbunden ist und von einem Benutzer über das Netzwerk bedient wird, wobei die Bedieninformationen Einzelheiten einer ersten Bedienung angeben, die mehrmals an dem Gerät (100) durchgeführt wurde,
auf Basis der in den Bedieninformationen angegebenen Einzelheiten der ersten Bedienung zu bestimmen, welches von einem Kandidatenbild und einem Eingabefeldbild als ein Bild ausgewählt werden soll, das einem Benutzer auf einem Benutzerendgerät (300) zu präsentieren ist, welches mit demselben Netzwerk verbunden und dazu konfiguriert ist, das Gerät (100) zu bedienen, wobei das Kandidatenbild einen Kandidaten für eine zweite Bedienung beinhaltet, die an dem Gerät (100) durchgeführt werden soll, und ein Bild umfasst, das eine Einzelauswahlform oder eine Mehrfachauswahlform enthält, wobei das Eingabefeldbild ein Eingabefeld für eine Einzelheit der zweiten Bedienung beinhaltet und ein Bild umfasst, welches eine Eingabebedienung in dem Eingabefeld zum Auswählen spezifischer Einzelheiten der Bedienung von dem Benutzer empfängt, und
ein Präsentieren des Bildes an den Benutzer gemäß dem Bestimmen zu steuern,
wobei der Prozessor beim Bestimmen ferner dazu eingerichtet ist:
einen Benutzer abhängig davon zu klassifizieren, dass a) ein Gesamtverhältnis einer Mehrzahl von Arten von Einzelheiten der Bedienung, die in der ersten Bedienung, welche in den Bedieninformationen angegeben ist, enthalten sind, 50 Prozent überschreitet, oder b) in Fällen anders als a), und das Kandidatenbild als das Bild, das dem Benutzer zu präsentieren ist, im Fall a) zu bestimmen und das Eingabefeldbild als das Bild, das dem Benutzer zu präsentieren ist, in Fällen anders als a) zu bestimmen.

7. Programm zum Veranlassen eines Computers, das Informationsverarbeitungsverfahren nach einem der Ansprüche 1 bis 5 auszuführen.

## Revendications

1. Procédé de traitement d'informations comprenant :
acquérir auprès d'un serveur (200) des informations de dispositif et des informations d'opération en association les unes avec les autres, les informations de dispositif étant des informations sur un dispositif (100) qui est connecté au serveur (200) via un réseau et est utilisé par un utilisateur via le réseau, les informations d'opération indiquant des détails d'une première opération effectuée sur le dispositif une pluralité de fois ;
déterminer, sur la base des détails de la première opération indiqués dans les informations d'opération, laquelle parmi une image candidate et une image de champ de saisie doit être sélectionnée en tant qu'image à présenter à un utilisateur sur un terminal utilisateur (300) connecté au même réseau et configuré pour faire fonctionner le dispositif (100), l'image candidate incluant un candidat pour une seconde opération à effectuer sur le dispositif (100) et comprenant une image qui inclut un formulaire à choix unique ou un formulaire à choix multiples, l'image de champ de saisie incluant un champ de saisie pour un détail de la seconde opération et comprenant une image qui reçoit une opération de saisie dans le champ de saisie pour sélectionner des détails spécifiques de l'opération auprès de l'utilisateur ; et
commander la présentation de l'image à l'utilisateur en fonction de la détermination,
dans lequel, dans la détermination,
classifier un utilisateur selon a) un ratio total d'une pluralité de types de détails d'opération inclus dans la première opération indiquée dans les informations d'opération dépasse 50 pour cent, ou b) dans des cas autres que a), et déterminer l'image candidate comme étant l'image à présenter à l'utilisateur dans le cas a) et déterminer l'image de champ de saisie comme étant l'image à présenter à l'utilisateur dans les cas autres que a).

2. Procédé de traitement d'informations selon la revendication 1,
dans lequel l'image candidate est une première image incluant un seul candidat pour la seconde opération ou une seconde image incluant une pluralité de candidats pour la seconde opération étant chacun le candidat pour la seconde opération,
la détermination comprend déterminer, sur la base des détails de la première opération indiqués dans les informations d'opération, laquelle parmi la première image servant d'image candidate et la seconde image servant d'image candidate doit être présentée, lorsqu'il est déterminé que l'image candidate doit être présentée, et
la commande comprend commander la présentation de la première image ou de la seconde image en tant qu'image candidate, en fonction de la détermination, lorsque l'image candidate doit être présentée.

3. Procédé de traitement d'informations selon la revendication 1 ou 2, comprenant en outre :
acquérir des premières informations sur des conditions dans lesquelles la première opération a été effectuée la pluralité de fois et des secondes informations sur une condition dans laquelle la seconde opération doit être effectuée,
dans lequel, dans la détermination, l'image candidate ou l'image de champ de saisie est déterminée en tant qu'image en comparant les premières informations et les secondes informations.

4. Procédé de traitement d'informations selon l'une quelconque des revendications 1 à 3, comprenant en outre :
acquérir un temps pendant lequel le dispositif (100) peut être programmé,
dans lequel, lorsque l'image candidate doit être affichée, parmi des candidats pour la seconde opération étant chacun le candidat pour la seconde opération, un candidat pour la seconde opération qui se situe en dehors du temps pendant lequel le dispositif (100) peut être programmé est exclu, et l'image candidate incluant un candidat pour la seconde opération qui demeure après l'exclusion est affichée.

5. Procédé de traitement d'informations selon l'une quelconque des revendications 1 à 4,
dans lequel la détermination est effectuée selon une caractéristique d'une interface utilisateur (UI) incluse dans un dispositif qui présente l'image.

6. Dispositif de traitement d'informations comprenant :
un processeur ; et
une mémoire,
dans lequel, en utilisant la mémoire, le processeur est adapté pour :
acquérir auprès d'un serveur (200) des informations de dispositif et des informations d'opération en association les unes avec les autres, les informations de dispositif étant des informations sur un dispositif (100) qui est connecté au serveur (200) via un réseau et est utilisé par un utilisateur via le réseau, les informations d'opération indiquant des détails d'une première opération effectuée sur le dispositif (100) une pluralité de fois,
déterminer, sur la base des détails de la première opération indiqués dans les informations d'opération, laquelle parmi une image candidate et une image de champ de saisie doit être sélectionnée en tant qu'image à présenter à un utilisateur sur un terminal utilisateur (300) connecté au même réseau et configuré pour faire fonctionner le dispositif (100), l'image candidate incluant un candidat pour une seconde opération à effectuer sur le dispositif (100) et comprenant une image qui inclut un formulaire à choix unique ou un formulaire à choix multiples, l'image de champ de saisie incluant un champ de saisie pour un détail de la seconde opération et comprenant une image qui reçoit une opération de saisie dans le champ de saisie pour sélectionner des détails spécifiques de l'opération auprès de l'utilisateur, et
commander la présentation de l'image à l'utilisateur en fonction de la détermination,
dans lequel, dans la détermination, le processeur est en outre adapté pour :
classifier un utilisateur selon a) un ratio total d'une pluralité de types de détails d'opération inclus dans la première opération indiquée dans les informations d'opération dépasse 50 pour cent, ou b) dans des cas autres que a), et déterminer l'image candidate comme étant l'image à présenter à l'utilisateur dans le cas a) et déterminer l'image de champ de saisie comme étant l'image à présenter à l'utilisateur dans les cas autres que a).

7. Programme pour amener un ordinateur à exécuter le procédé de traitement d'informations selon l'une quelconque des revendications 1 à 5.
